# EUROPÄISCHE PATENTSCHRIFT

(11) **EP 3 046 722 B1**
(45) Veröffentlichungstag und Bekanntmachung des Hinweises auf die Patenterteilung: **25.10.2017**
(21) Anmeldenummer: 14796394.6
(22) Anmeldetag: 16.09.2014
(51) Int. Cl.: B23K 26/20, B23K 26/30, F16L 55/00, H05B 6/00, H05B 6/10, C21D 9/50, B23K 26/26, B23K 26/28

(54) **SCHWEISSVORRICHTUNG MIT EINER WIRKENDEN HEIZEINRICHTUNG ZUM ERWÄRMEN DES WERKSTÜCKES**
WELDING DEVICE COMPRISING AN ACTIVE HEATING DEVICE FOR HEATING THE WORKPIECE
GABARIT DE SOUDAGE ÉQUIPÉ D'UN DISPOSITIF CHAUFFANT AYANT POUR EFFET DE CHAUFFER LA PIÈCE

(30) Priorität: 17.09.2013 AT 505932013; 05.09.2014 AT 506112014
(43) Veröffentlichungstag der Anmeldung: 27.07.2016
(73) Patentinhaber: STIWA Holding GmbH, 4800 Attnang-Puchheim (AT)
(72) Erfinder: GRAUSGRUBER, Klaus, 4691 Breitenschützing (AT); THALER, Michael, 4840 Vöcklabruck (AT); PAUDITZ, Michael, 4690 Schwanenstadt (AT)
(74) Vertreter: Burger, Hannes
(86) Internationale Anmeldenummer: PCT/AT2014/050206
(87) Internationale Veröffentlichungsnummer: WO 2015/039154

(56) Entgegenhaltungen:
- EP-A2- 0 038 655
- DE-A1-102010 063 835
- GB-A- 794 001
- US-A1- 2004 185 946
- US-A1- 2011 253 677

## Beschreibung

Die Erfindung betrifft eine Schweißvorrichtung, insbesondere Laserschweißvorrichtung, zum Schweißen von Werkstücken gemäß dem Oberbegriff des Anspruchs 1 (siehe z.B. DE10 2010 063835 A). Die Erfindung betrifft auch Schweißverfahren gemäß Ansprüche 23-24, die eine solche Schweißvorrichtung verwenden. Die EP0739678B1 offenbart ein Verfahren zur Herstellung von geschweißten Stahlrohren. Dabei kommt ein Induktor zum Einsatz, der nach einer Seite hin offen ist und dadurch über ein zu schweißendes Rohr positioniert werden kann. Der Induktor dient der Vorerwärmung des Rohres. Der Nachteil eines derartigen Induktors besteht darin, dass das Vorerwärmen nicht gleichmäßig über den gesamten Umfang des Rohres erfolgen kann, wodurch sich unerwünschte Spannungen im Bereich der Schweißstelle ergeben.

Die DE19637465C1 offenbart im Zusammenhang mit Strahlschweißen einen zweiwindigen Halbschaleninduktor zum Vorwärmen des Werkstückes. Der Nachteil einer ungleichmäßigen Vorerwärmung manifestiert sich hier noch stärker als bei der Schweißvorrichtung der vorangegangenen Druckschrift.

Die DE4017634A1 und die EP0262363B1 offenbaren ebenfalls eine induktive Vorerwärmung eines zu schweißenden Werkstückes. Hier besteht der Nachteil darin, dass das Werkstück in den Induktor eingefädelt werden muss und daher nur entlang seiner Längserstreckung gefördert bzw. in die Schweißvorrichtung eingebracht werden kann.

Das Ziel der Erfindung besteht darin, die sich aus dem Stand der Technik ergebenden Nachteile zu beseitigen und eine Schweißvorrichtung bereitzustellen, mit dem einerseits eine gleichmäßige Erwärmung des Werkstückes auch im unmittelbaren Bereich der (zukünftigen) Schweißnaht erzielbar ist. In Ausführungsformen soll die Einbringung des Werkstückes bzw. zwei miteinander zu verbindender Werkstückteile wesentlich erleichtert werden. Die Schweißvorrichtung soll sich durch platzsparendes Design auszeichnen und leicht steuerbar sein. Eine Schweißvorrichtung gemäß der Erfindung ist im Anspruch 1 definiert. Die Heizeinrichtung kann als Vorwärmeinheit und/oder als Nachwärmeinheit ausgebildet sein. Selbst während des eigentlichen Schweißvorganges kann die Heizeinrichtung in Betrieb gesetzt sein, um die Wärmeeinbringung durch den Schweißkopf zu unterstützen. Es kann auch eine Heizeinrichtung als Vorwärmeinheit (Laserquelle) ausgebildet sein und eine weitere Heizeinrichtung als Nachwärmeinheit (Induktor) ausgebildet sein.

Unter Arbeitsbereich wird jener Bereich verstanden, der in der Arbeitsstellung bzw. in den Arbeitsstellungen des in Betrieb genommenen Schweißkopfes von diesem unmittelbar (Aufschmelzen) und mittelbar (Temperatureinbringung) beeinflusst wird. Mit anderen Worten handelt es sich dabei um einen Bereich um die (entstehende) Schweißnaht. Der Arbeitsbereich ist nicht auf die Schweißstelle als solche beschränkt, sondern umfasst auch einen sich um die Schweißstelle erstreckenden Bereich. Der Schweißkopf kann z.B. derart ausgebildet sein, dass er die Arbeitsstellung bei jedem Schweißzyklus von neuem anfährt und inzwischen in einer Warteposition verharrt.

Eine bevorzugte Ausführungsform ergibt sich dadurch, dass die Heizeinrichtung oder zumindest ein Teil der Heizeinrichtung relativ zum Arbeitsbereich bewegbar ist, wobei vorzugsweise die Heizeinrichtung oder zumindest ein Teil der Heizeinrichtung mit einem Antrieb verbunden und durch diesen antreibbar ist. Dies erleichtert das Einbringen und den Wechsel der Werkstücke, wodurch die Taktzeit erhöht werden kann. Die Heizeinrichtung bzw. ein Teil davon kann vom Arbeitsbereich weggefahren werden, um dort vorübergehend Platz zu schaffen. Sobald das Werkstück positioniert ist, kann die Heizeinrichtung bzw. einer ihrer Teile wieder in ihre/seine Arbeitsposition verfahren werden, um dort für eine Erwärmung des Werkstückes zu sorgen. Auch kann der Antrieb der Heizeinrichtung bzw. eines Teiles davon dafür genutzt werden, um ein gleichmäßiges Aufheizen des Werkstückes zu gewährleisten, z.B. kann sich die Heizeinrichtung während des Heizvorganges um den Arbeitsbereich drehen.

Bevorzugt ist der Arbeitsbereich in der Arbeitsstellung von einer gehäuseartigen Struktur umgeben, die eine Kammer um den Bereich der entstehenden Schweißnaht bildet. Die gehäuseartige Struktur kann zumindest eine Öffnung für das Einbringen von Schutzgas und/oder zumindest eine Öffnung für den Auslass von Schutzgas und/oder eine Arbeitsöffnung zum Einbringen der Energie des Schweißkopfes aufweisen. Dadurch wird die Wärme im Bereich der Schweißstelle gehalten und ein sparsamer Einsatz eines Spülmediums gewährleistet.

Bevorzugt ist die gehäuseartige Struktur aus thermisch isolierendem Material gebildet oder von einer thermischen Isolationsschicht umgeben.

Eine bevorzugte Ausführungsform ergibt sich dadurch, dass die Heizeinrichtung zumindest einen im Arbeitsbereich angeordneten elektromagnetischen Induktor zum Erwärmen des Werkstückes durch Induktion umfasst. Dies stellt eine besonders einfache und gleichmäßige Erwärmung sicher. Die Ansteuerung und Regelung eines elektromagnetischen Induktors hat sich als besonders zuverlässig herausgestellt.

Eine bevorzugte Ausführungsform ergibt sich dadurch, dass der Induktor aus zumindest zwei Induktorteilen gebildet wird, die relativ zueinander bewegbar sind, um in einer Arbeitsstellung ein zu schweißendes Werkstück zu umschließen und in einer Öffnungsstellung, in der die Induktorteile voneinander beabstandet sind, das Werkstück freizugeben.

Der Vorteil dieser Ausführungsform ist insbesondere darin zu sehen, dass das Einbringen des Werkstückes bzw. miteinander zu verbindender Werkstückteile (Verbindungsschweißen) in die Schweißvorrichtung bzw. die Positionierung des Werkstückes im Arbeitsbereich des Schweißkopfes auf sehr einfache Weise erfolgen kann. In der Öffnungsstellung des Induktors sind die Induktorteile ausreichend voneinander beabstandet, sodass das Werkstück aus verschiedenen Richtungen, insbesondere auch quer zur Längserstreckung des Werkstückes, eingebracht werden kann. Es ist nicht mehr nötig das (längliche) Werkstück in den Induktor einzufädeln.

Die Induktorteile sind bevorzugt Segmente eines in seiner Gesamtheit ringförmigen Gebildes, das in der Arbeitsstellung ein längliches Werkstück umgibt. In einer bevorzugten Ausführungsform sind zwei Induktorteile vorgesehen, die im Wesentlichen gleich große Halbsegmente des Induktors bilden. Selbstverständlich sind auch mehr als zwei Induktorteile denkbar, auch ist die gleiche Größe der Induktorteile nicht zwingend. Das ringförmige Gebilde muss nicht unbedingt kreisringförmig sein, sondern könnte auch mit Ecken versehen sein (z.B. viereckig bzw. auch vieleckig).

Die Schweißvorrichtung ist bevorzugt eine Laserschweißvorrichtung mit einem Laserbearbeitungskopf, da die emittierten Photonen durch das Magnetfeld des Induktors unbeeinflusst bleiben und somit ein induktives Heizen auch während des eigentlichen Schweißvorganges (Laserstrahl wird auf das Werkstück gerichtet) problemlos von statten geht. Grundsätzlich wären aber auch auf anderem Prinzip funktionierende Schweißvorrichtungen denkbar: Strahlschweißen (Laser, Elektronen), Lichtbogenschweißen, MAG

Eine bevorzugte Ausführungsform ergibt sich dadurch, dass die Induktorteile in Richtung quer, vorzugsweise senkrecht zur Achse des Induktors relativ zueinander bewegbar sind. Dies stellt eine besonders platzsparende und im Hinblick auf das Werkstück-Handling vorteilhafte Lösung dar.

Eine weitere bevorzugte Ausführungsform ergibt sich dadurch, dass zumindest einer der Induktorteile mit einem Antrieb verbunden und durch diesen relativ zum anderen Induktorteil antreibbar ist. Eine händische Betätigung ist dadurch nicht erforderlich, was insbesondere bei den hohen Temperaturen von großem Vorteil ist. Es wäre selbstverständlich auch möglich, beide Induktorteile durch einen gemeinsamen oder getrennte Antriebe anzutreiben. Wichtig ist, dass eine Öffnungsstellung erreicht wird, in der ein Werkstück in den Arbeitsbereich eingebracht werden kann.

In einer anderen Ausführungsform könnte die Heizeinrichtung oder zumindest ein Teil der Heizeinrichtung parallel zur Längsachse des Werkstückes verfahrbar ausgebildet sein.

Eine weitere bevorzugte Ausführungsform ergibt sich dadurch, dass die Schweißvorrichtung eine Steuereinrichtung umfasst, die mit dem Antrieb verbunden ist und diesen automatisch steuert. Dies ermöglicht eine weitreichende Automatisierung des Schweißvorganges. Zusammen mit einer Fördereinrichtung für den An- und Abtransport der Werkstücke bzw. für ihre Positionierung im Arbeitsbereich, insbesondere einer angetriebenen Kette oder Bandes, kann der gesamte Prozess automatisiert ablaufen.

Eine weitere bevorzugte Ausführungsform ergibt sich dadurch, dass die Schweißvorrichtung zumindest zwei Gehäuseteile aufweist, die relativ zueinander bewegbar sind, um in einer Arbeitsstellung eine Kammer um den Arbeitsbereich zu bilden, und dass einer der Induktorteile in einem der Gehäuseteile und ein anderer Induktorteil in einem anderen Gehäuseteil integriert ist. Die Gehäuseteile bilden ein mehr oder weniger umschlossene Kammer, die zur sparsamen Bereitstellung eines Spülmediums in den Arbeitsbereich dienen kann. Außerdem verhindern die Gehäuseteile, dass die Wärme nach außen hin verloren geht. Die (Energie)Effizienz eines derartigen Prozesses lässt sich damit stark erhöhen.

Eine weitere bevorzugte Ausführungsform ergibt sich dadurch, dass die Induktorteile jeweils an der Innenwand der Gehäuseteile sitzen. Dies ermöglicht eine besonders kompakte und platzsparende Lösung, bei der die Induktorteile besonders nahe an der (zukünftigen) Schweißnaht angeordnet werden können.

Eine weitere bevorzugte Ausführungsform ergibt sich dadurch, dass zumindest einer der Gehäuseteile einen Einlass für die Zufuhr eines Spülmediums aufweist.

Eine weitere bevorzugte Ausführungsform ergibt sich dadurch, dass zumindest einer der Gehäuseteile einen Auslass für die Abfuhr eines Spülmediums aufweist.

Eine weitere bevorzugte Ausführungsform ergibt sich dadurch, dass zumindest einer der Gehäuseteile eine Arbeitsöffnung aufweist, durch die Wärmeenergie von dem außerhalb der Kammer angeordneten Schweißkopf zum Werkstück gelangen kann. Der Schweißkopf ist dabei außerhalb der Gehäuseteile angeordnet. Die in die Kammer und somit in den Arbeitsbereich eingebrachte Wärmeenergie wird nur sehr langsam an die Umgebung abgegeben.

Bevorzugt sind die Gehäuseteile mit einer Isolation aus thermisch isolierendem Material umgeben, wodurch der Effekt der Wärmekonzentration im Arbeitsbereich weiter verstärkt wird.

Eine weitere bevorzugte Ausführungsform ergibt sich dadurch, dass im Arbeitsbereich ein Temperatursensor angeordnet ist, der vorzugsweise an einem der Induktorteile angekoppelt ist. Eine Temperaturmessung im unmittelbaren Arbeitsbereich ermöglicht die Regelung wichtiger Prozessparameter, insbesondere der Leistung, wodurch die eine besonders gute Qualität der Schweißnaht gewährleistet wird.

Eine weitere bevorzugte Ausführungsform ergibt sich dadurch, dass die Windungsanzahl des Induktors in Bezug auf den Arbeitsbereich symmetrisch ist. Dies gewährleistet eine gleichmäßige induktive Vor- und/oder Nacherwärmung oder ein gleichmäßiges induktives Wärmen während des eigentlichen Schweißvorganges. Symmetrisch bedeutet in diesem Zusammenhang, dass auf beiden Seiten der Schweißstelle gleich viele stromführende Windungen vorgesehen sind.

Eine weitere bevorzugte Ausführungsform ergibt sich dadurch, dass die Schweißvorrichtung eine Steuereinrichtung umfasst, die mit der Stromversorgung des Induktors, mit dem Schweißkopf und gegebenenfalls mit dem Temperatursensor verbunden ist. Dadurch lässt sich eine vollautomatisierte Steuerung des erfindungsgemäßen Schweißvorrichtung realisieren.

Eine weitere bevorzugte Ausführungsform ergibt sich dadurch, dass die Heizeinrichtung eine Strahlungsquelle, insbesondere eine Laserquelle, ist, wobei vorzugsweise die Strahlungsquelle durch einen Antrieb um den Arbeitsbereich drehbar ist. Durch die Drehbarkeit können alle Bereiche der Schweißstelle gleichmäßig bestrahlt werden.

Eine weitere bevorzugte Ausführungsform ergibt sich dadurch, dass die Heizeinrichtung Strahlumlenkmittel umfasst, die vom Schweißkopf emittierte Strahlen umlenkt und auf den Arbeitsbereich richtet. In dieser Ausführungsform kann die Energie des Schweißkopfes gleichzeitig zur Vorwärmung und/oder Nachwärmung genutzt werden.

Eine weitere bevorzugte Ausführungsform ergibt sich dadurch, dass die Heizeinrichtung zumindest ein elektrisches Heizelement umfasst.

Eine weitere bevorzugte Ausführungsform ergibt sich dadurch, dass die zumindest eine Heizeinrichtung derart ausgebildet ist, dass sie beidseits der Schweißstelle auf das Werkstück wirkt.

Eine weitere bevorzugte Ausführungsform ergibt sich dadurch, dass eine erste Heizeinrichtung auf eine Seite der Schweißstelle wirkt und eine zweite Heizeinrichtung auf die andere Seite der Schweißstelle wirkt.

Diese beiden Ausführungsformen sorgen ebenfalls für eine gleichmäßige Erwärmung des Werkstückes.

Eine weitere bevorzugte Ausführungsform ergibt sich dadurch, dass jeder Schweißplatz bzw. jede Schweißbahn eine eigene Heizeinrichtung umfasst. Dies erlaubt einen parallelen Arbeitsgang, wodurch die Taktzeiten wesentlich verkürzt werden können. So kann an einer ersten Schweißbahn eine Vorerwärmung erfolgen, während eine weitere Schweißbahn bereits mit einem Werkstück bestückt werden kann. Wird auf der ersten Schweißbahn geschweißt kann auf der zweiten Schweißbahn bereits vorerwärmt werden. Der Werkstückträger sorgt für eine ständige Beschickung der Schweißbahnen. Es gibt keine Totzeiten.

Ferner kann es zweckmäßig sein, dass die Schweißvorrichtung eine Haltevorrichtung umfasst mittels welcher ein Schweißzusatz zwischen einer ersten Fügefläche eines ersten Bauteiles und einer zweiten Fügefläche eines zweiten Bauteiles einbringbar ist, wobei der Schweißzusatz als geformter Schweißzusatzkörper ausgebildet ist, der eine erste Anlagefläche aufweist, welche an die erste Fügefläche des ersten Bauteiles anlegbar ist und eine zweite Anlagefläche aufweist, welche an die zweite Fügefläche des zweiten Bauteiles anlegbar ist. Von Vorteil ist hierbei, dass der Schweißzusatzkörper unabhängig vom eigentlichen Schweißvorgang bzw. Schweißverfahren gefertigt werden kann und während des Schweißverfahrens zwischen die zu fügenden Bauteile eingebracht werden kann. Hierdurch kann der Schweißzusatzkörper mittels eines beliebigen Herstellungsverfahrens, wie etwa Gießen, Pulverspritzen und anschließendes Sintern, selektives Laserschmelzen oder durch mechanische Bearbeitung, hergestellt werden. Somit ist es möglich, dass der Schweißzusatzkörper eine genaue vordefinierte Form aufweist, wodurch der Normalabstand zwischen zwei Bauteilen exakt vorgebbar ist, beziehungsweise eine bestimmte Legierungsverteilung im Schweißzusatzkörper vorgebbar ist. Ein weiterer Vorteil des erfindungsgemäßen Schweißzusatzes liegt darin, dass dieser an einer unterschiedlichen Fertigungseinheit produziert werden kann und somit vom Schweißverfahren und auch von den zu schweißenden Bauteilen unabhängig vorproduziert bzw. bereitgestellt werden kann.

Das Ziel wird auch mit einem Schweißverfahren, insbesondere Laserschweißverfahren, zum Schweißen von metallischen, insbesondere Werkstücken mit einer Schweißvorrichtung nach einem der vorhergehenden Ansprüche, gekennzeichnet durch die Schritte: Positionieren eines zu schweißenden Werkstückes im Arbeitsbereich des Schweißkopfes; Durchführung des Schweißvorganges durch Betätigen des Schweißkopfes; und Wärmen des Werkstückes durch die Heizeinrichtung vor, während und/oder nach dem Schweißvorgang.

Schweißverfahren, insbesondere Laserschweißverfahren, zum Schweißen von metallischen, insbesondere länglichen Werkstücken mit einer Schweißvorrichtung nach einer der vorhergehenden Ausführungsformen erreicht, gekennzeichnet durch die Schritte: Positionieren eines zu schweißenden Werkstückes im Arbeitsbereich des Schweißkopfes während sich der Induktor in einer Öffnungsstellung befindet, in der die Induktor-teile voneinander beabstandet sind; Relativbewegen der Induktorteile in die Arbeitsstellung, um das zu schweißende Werkstück zu umschließen; Durchführung des Schweißvorganges durch Betätigen des Schweißkopfes; und Wärmen des Werkstückes durch Bestromung des Induktors.

Zusätzlich zu den bereits erwähnten Vorteilen ist hier zu erwähnen, dass das zusätzliche Wärmen des Werkstückes durch Induktion folgende vorteilhafte Wirkungen haben kann: Reduzierung des Energieverbrauches des Schweißkopfes; Gleichmäßige Vor- und/oder Nachwärmung zur Verhinderung von Härterissen; und langsames und kontrolliertes Abkühlen zur Erhöhung der Festigkeit der Schweißnaht.

Eine bevorzugte Ausführungsform ergibt sich dadurch, dass ein Wärmen des Werkstückes durch die Heizeinrichtung (z.B. Bestromung des Induktors) vor dem Schweißvorgang erfolgt, wobei vorzugsweise die Dauer des Heizvorganges vor dem Schweißvorgang zumindest 0,5s, vorzugsweise zumindest 1s beträgt. Durch diese Maßnahme werden das Werkstück bzw. die Werkstückteile im Bereich der (zukünftigen) Schweißnaht auf ein vorgegebenes Temperaturniveau gebracht (z.B. zwischen 300°C und 400°C). Die Leistung des Schweißkopfes, z.B. Laserschweißkopfes, kann daher kleiner sein.

Eine weitere bevorzugte Ausführungsform ergibt sich dadurch, dass ein Wärmen des Werkstückes durch die Heizeinrichtung (z.B. Bestromung des Induktors) während des Schweißvorganges erfolgt. Die Heizeinrichtung unterstützt dabei die Wärmeentwicklung im Werkstück, ohne dabei für sich allein einen Schweißvorgang durchzuführen zu können.

Eine weitere bevorzugte Ausführungsform ergibt sich dadurch, dass ein Wärmen des Werkstückes durch die Heizeinrichtung (z.B. Bestromung des Induktors) nach dem Schweißvorgang erfolgt, wobei vorzugsweise die Dauer des Heizvorganges nach dem Schweißvorgang zumindest 5s, vorzugsweise zumindest 10s beträgt. Eine derartige Nachbehandlung ist gemäß Erfindung besonders vorteilhaft, da unmittelbar an den Schweißvorgang anschließend die Schweißnaht auf einem vorgegebenen Temperaturniveau gehalten werden kann (vorzugsweise zwischen 300°C und 400°C), um Risse im Material hintanzuhalten. Durch die Anordnung der Heizeinrichtung (z.B. Induktors) im Arbeitsbereich bzw. deren Ausrichtung auf den Arbeitsbereich wird vor Ort gewährleistet, dass die Temperatur nicht unter einen für die Härtung der Schweißnaht ungünstige Temperatur fällt. Eine gesonderte Wärmebehandlung außerhalb der Schweißvorrichtung ist somit nicht mehr erforderlich.

Eine weitere bevorzugte Ausführungsform ergibt sich dadurch, dass vor, während und/oder nach dem Schweißvorgang eine Temperaturmessung durch einen im Arbeitsbereich angeordneten Temperatursensor erfolgt und dass das Wärmen des Werkstückes durch Bestromung des Induktors in Abhängigkeit der Temperaturmessung von einer Steuereinrichtung geregelt wird. Dies ermöglicht eine besonders genaue Temperaturregelung und führt zu hochqualitativen Schweißnähten.

Eine bevorzugte Ausführungsform stellt das Laserschweißen mit integriertem Induktionswärmeverfahren dar. Ein geteilter Induktor fährt von oben und unten über das zu schweißende Werkstück, z.B. ein Rohr, nachdem die Fördereinrichtung, z.B. Kette, eingetaktet ist. Dies bringt eine markante Reduzierung der nicht wertschöpfenden Bewegungen, ansonsten müsste über das Werkstück (Rohr) aufgefädelt werden. Die Vorwärmzeit beträgt ca. 1-2 s. Anschließend erfolgt das Laserschweißen. Die Nachwärmzeit beträgt je nach Material zumindest ca. 10s.

Durch diese Maßnahme erfolgt absolut keine Unterbrechung zwischen dem Laserschweißvorgang und dem Nachwärmen. Härterisse werden vermieden, ein sicherer Prozess wird gewährleistet. Anschließend fahren die Induktorteile auseinander und die Förderkette wird weitergetaktet.

Somit kann in einem einzigen Modul vorgewärmt, geschweißt und nachgewärmt werden. Es ist vorzugsweise nur ein kleiner Induktor nötig (Wärme nur dort wo benötigt), wodurch Energie gespart werden kann.

Wie bereits erwähnt kann der Induktor in einer Schale bzw. einem Gehäuse integriert sein, welche mit Spülgas geflutet wird und um den Schweißbereich eine Art Kammer bildet. Auf der gegenüberliegenden Seite kann ein Absaugkanal für das Spülgas vorgesehen sein. Eine Temperaturmessung, insbesondere innerhalb der Kammer kann vorgesehen sein.

Das erfindungsgemäße Verfahren kann sowohl bei der Herstellung von Rund- als auch bei Längsnähten eingesetzt werden.

Weiters kann vorgesehen sein, dass das Schweißverfahren folgende Verfahrensschritte umfasst:
- Bereitstellen des ersten Bauteiles;
- Bereitstellen eines als geformter Schweißzusatzkörper ausgebildeten Schweißzusatzes mit einer ersten und einer zweiten Anlagefläche;
- Positionieren des Schweißzusatzkörpers, wobei die erste Anlagefläche des Schweißzusatzkörpers mit der ersten Fügefläche des ersten Bauteiles zur Anlage gebracht wird;
- Positionieren des zweiten Bauteiles relativ bezüglich des ersten Bauteils, wobei die zweite Fügefläche des zweiten Bauteiles mit der zweiten Anlagefläche des Schweißzusatzkörpers zur Anlage gebracht wird;
- Durchführen des Schweißvorgangs mit zumindest teilweisem Aufschmelzen des ersten Bauteils, des Schweißzusatzkörpers und des zweiten Bauteils durch Einbringen von Wärmeenergie und bilden einer Schweißnaht.

Von Vorteil an diesem thermischen Fügeverfahren ist, dass der Schweißzusatz in Form des Schweißzusatzkörpers zugeführt werden kann. Dieser kann unabhängig von den beiden Bauteilen, gefertigt werden und im Fügeverfahren zur Verfügung gestellt werden. Im Gegensatz zur Beschichtung eines Bauteiles ist es hier auch nicht notwendig, dass die zu verbindenden Bauteile vor dem Fügevorgang behandelt werden. Somit kann insbesondere in einer Serienfertigung die Durchlaufzeit erhöht werden, da der Schweißzusatzkörper ausgelagert produziert und somit jederzeit bereitgestellt werden kann. Ein weiterer Vorteil des erfindungsgemäßen Verfahrens liegt darin, dass entweder gar kein weiterer Schweißzusatz während des Schweißverfahrens zugeführt werden muss, oder wenigstens auf einen Teil dieses zuzuführenden Schweißzusatzes verzichtet werden kann, da der Schweißzusatz zumindest teilweise in Form des Schweißzusatzkörpers zwischen die Fügeflächen der beiden zu verbindenden Bauteile eingebracht ist. Der eigentliche Schweißvorgang kann ohne komplizierte Zuführungen von Zusatzwerkstoffen auf Standardanlagen stattfinden. Ein weiterer Vorteil des erfindungsgemäßen Verfahrens liegt darin, dass die Dosierung von Legierungselementen in der Schweißnaht durch die geometrischen Abmessungen des Schweißzusatzkörpers sowie dessen Zusammensetzung sehr genau eingestellt werden kann. Diese Dosierung bleibt auch bei Geschwindigkeitsänderungen während des Schweißverfahrens konstant, wohingegen gemäß des Standes der Technik eine Draht oder Pulverzufuhr an die Schweißgeschwindigkeit angepasst werden muss. Dies kann im Bereich von Beschleunigungsstrecken Probleme bereiten.

Weiters kann vorgesehen sein, dass die beiden Bauteile vor und/oder während des Schweißvorgangs mit einer gegeneinander gerichteten Druckkraft beaufschlagt und somit aneinander angedrückt werden. Von Vorteil ist hierbei, dass der Schweißzusatzkörper mit einer vordefinierten Kraft zwischen den beiden zu verbindenden Bauteilen gespannt werden kann. Somit kann der Druck, welcher auf die Fügeflächen wirkt, voreingestellt werden und an die Erfordernisse der Schweißnaht angepasst werden. Wird ein Schweißzusatzkörper verwendet, an welchem ein Federelement ausgebildet ist, so kann durch die Druckkraft das Federelement vorgespannt werden, und nach dem Schweißvorgang im Federelement gespeichert werden, sodass es zu inneren Spannungen im Bereich der Schweißstelle der beiden Bauteile kommt. Gemäß einer Weiterbildung ist es möglich, dass die Wärmeenergie mittels eines Schweißkopfes, insbesondere durch Laserschweißen, Plasmaschweißen, Lichtbogenschweißen, Gasschmelzschweißen, defokussiertem Elektronenstrahlschweißen, usw. eingebracht wird. Von Vorteil ist hierbei, dass durch externes Einbringen der Wärmeenergie erreicht werden kann, dass beispielsweise nur ein äußerer Randbereich des Schweißzusatzkörpers aufgeschmolzen wird. Dadurch kann weiters erreicht werden, dass die Wärmeenergie gezielt und lokal eingebracht werden kann, um eine gewünschte Form der Schweißnaht zu erreichen.

Entsprechend einer vorteilhaften Weiterbildung kann vorgesehen sein, dass die eingebrachte Wärmeenergie dermaßen bemessen wird, dass während des Schweißvorganges nur ein äußerer Randbereich des Schweißzusatzkörpers, sowie die jeweils an den äußeren Randbereich angrenzenden Teilabschnitte der beiden Bauteile aufgeschmolzen wird. Von Vorteil ist hierbei, dass ein innerer Bereich des Schweißzusatzkörpers nicht aufgeschmolzen wird und somit der Normalabstand bzw. der Abstand der beiden Bauteile zueinander gewahrt werden kann. Somit ist es möglich, dass die hergestellte Baugruppe eine möglichst hohe Genauigkeit aufweist. Weiters kann dadurch erreicht werden, dass beispielsweise bei Einsatz eines Schweißzusatzkörpers mit einem elastischen Federelement im Innenabschnitt, dieses Federelement nicht aufgeschmolzen wird und somit seine Form wahren kann, wodurch die eingestellte Vorspannung während des Schweißvorganges nicht verloren geht.

Insbesondere kann es vorteilhaft sein, wenn die beiden Fügeflächen der Bauteile mit einem zueinander in etwa gleichen Querschnitt ausgebildet werden und unter Ausbildung eines Normalabstandes, welcher von dem Schweißzusatzkörper überbrückt wird, in Form eines Stumpfstoßes benachbart nebeneinander angeordnet werden. Besonders bei der Ausbildung eines Stumpfstoßes bringt der erfindungsgemäße Schweißzusatzkörper die aufgezählten Vorteile mit sich. Ideal ist dies beispielsweise bei der Herstellung von miteinander verschweißten Hohlprofilen, wie etwa Rohren, oder aber auch beim Verschweißen von wellenförmigen Bauteilen.

Der Schweißkopf kann sich in Bezug auf das Werkstück drehen oder aber das Werkstück dreht sich relativ zum Schweißkopf.

Zum besseren Verständnis der Erfindung wird diese anhand der nachfolgenden Figuren näher erläutert.

Es zeigen jeweils in stark vereinfachter, schematischer Darstellung:
- Fig. 1: eine Schweißvorrichtung;
- Fig. 2: einen Gehäuseteil mit integriertem Induktorteil;
- Fig. 3: die Außenseite zweier zusammengehöriger Gehäuseteile;
- Fig. 4: einen Ausschnitt einer erfindungsgemäßen Schweißvorrichtung;
- Fig. 5: eine Kammer bildenden Gehäuseteile;
- Fig. 6: den Temperaturverlauf im unmittelbaren Bereich der Schweißnaht;
- Fig. 7: eine mit einer Strahlung emittierende Heizeinrichtung;
- Fig. 8: parallelen Schweißplätzen bzw. Schweißbahnen;
- Fig. 9: eine Schnittdarstellung einer in Explosionsansicht dargestellten Schweißbauteilanordnung;
- Fig. 10: eine Schnittdarstellung einer zusammengefügten Schweißbauteilanordnung;
- Fig. 11: eine Schnittdarstellung einer zu einer Baugruppe verschweißten Schweißbauteilanordnung;
- Fig. 12: eine Schnittdarstellung eines Schweißzusatzkörpers;
- Fig. 13: eine Schnittdarstellung einer Schweißbauteilanordnung mit lamellenförmigen Federelement im Schweißbauteilkörper;
- Fig. 14: eine Schnittdarstellung einer Schweißbauteilanordnung mit gestanztem Federelement im Schweißbauteilkörper;
- Fig. 15: eine Vorderansicht einer Schweißbauteilanordnung mit Schweißzusatzkörper in Lamellenform;
- Fig. 16: eine Schnittdarstellung einer Schweißbauteilanordnung mit einem Schweißzusatzkörper mit unterschiedlichen Materialzusammensetzungen;
- Fig. 17: eine Schnittdarstellung einer Schweißbauteilanordnung mit einem Schweißzusatzkörper mit winkelig angeordneten Anlageflächen.

Einführend sei festgehalten, dass in den unterschiedlich beschriebenen Beispiele gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Beispiele zeigen mögliche Varianten der Schweißvorrichtung, wobei an dieser Stelle bemerkt sei, dass die Erfindung nicht auf die speziell dargestellten Varianten derselben eingeschränkt ist, sondern vielmehr auch diverse Kombinationen der einzelnen Varianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus der Schweißvorrichtung diese bzw. deren Bestandteile teilweise unmaßstäblich und/oder vergrößert und/oder verkleinert dargestellt wurden

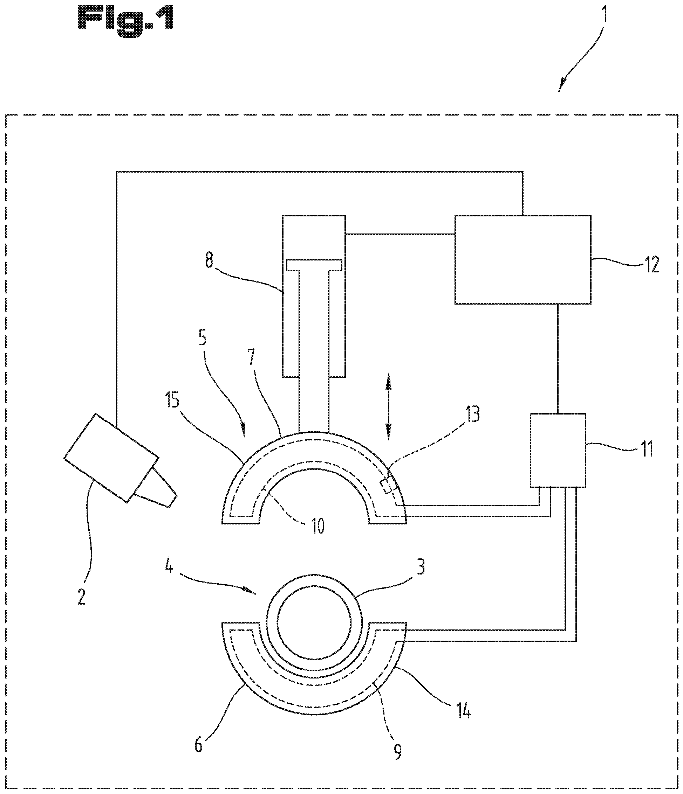

Fig. 1 zeigt eine Schweißvorrichtung 1 in Form einer Laserschweißvorrichtung, zum Schweißen von Werkstücken 3, mit zumindest einem Laserschweißkopf 2, der in der Arbeitsstellung auf einen Arbeitsbereich 4 gerichtet ist. Die Schweißvorrichtung umfasst zumindest eine auf den Arbeitsbereich 4 wirkende Heizeinrichtung 5 zum Erwärmen des Werkstückes 3, insbesondere vor und/oder nach dem Schweißvorgang oder auch während des Schweißvorganges.

In der dargestellten Form ist die Heizeinrichtung 5 oder zumindest ein Teil 6, 7 der Heizeinrichtung 5 relativ zum Arbeitsbereich 4 bewegbar. Dazu ist ein Teil 6 der Heizeinrichtung 5 mit einem Antrieb 8 verbunden und durch diesen antreibbar. Der Antrieb 8 kann z.B. ein pneumatischer, ein hydraulischer, ein elektrischer oder magnetischer Antrieb sein.

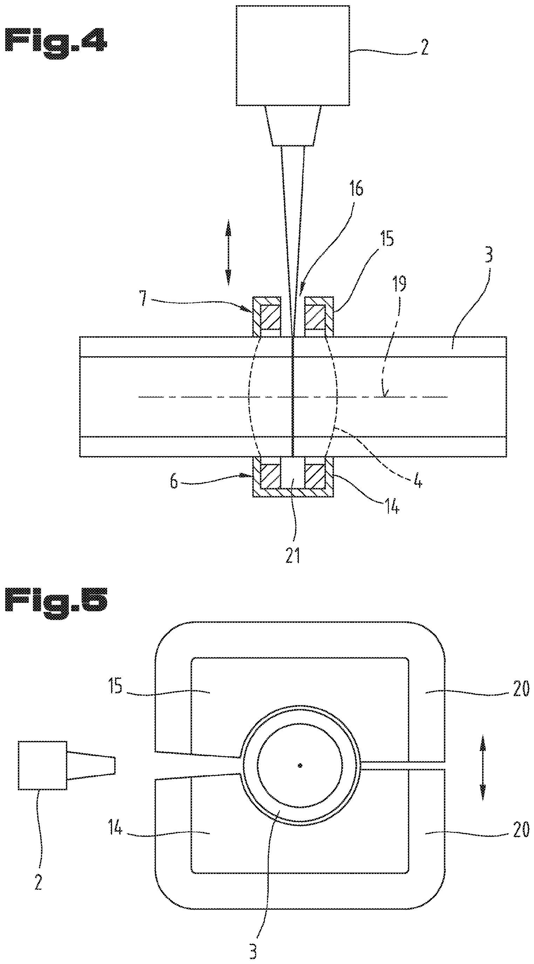

In der dargestellten Form umfasst die Heizeinrichtung zumindest einen im Arbeitsbereich 4 angeordneten Induktor 5 zum Erwärmen des Werkstückes 3 durch Induktion. Der Induktor 5 wird aus zumindest zwei Induktorteilen 6, 7 gebildet, die relativ zueinander bewegbar sind, um in einer Arbeitsstellung ein zu schweißendes Werkstück 3 zu umschließen und in einer Öffnungsstellung, in der die Induktorteile 6, 7 voneinander beabstandet sind, das Werkstück 3 freizugeben. Während Fig. 1 eine Öffnungsstellung zeigt, ist in den Fig. 4 und 5 die Arbeitsstellung des Induktors 5 zu sehen. Die um den Arbeitsbereich 4 angeordneten stromführenden Windungen 9, 10 der Induktorteile 6, 7 sind rein schematisch dargestellt und könnten jeden geeigneten Verlauf aufweisen.

Die Induktorteile 6, 7 sind in Richtung quer, vorzugsweise senkrecht zur Achse 19 des Induktors 5 (Fig. 4) relativ zueinander bewegbar. Zumindest einer der Induktorteile 6 kann mit einem Antrieb 8 verbunden sein und durch diesen relativ zum anderen Induktorteil 7 antreibbar. Die Induktorteile können sich von oben und unten um das Werkstück schließen oder aber auch aus seitlicher Richtung (Fig. 5).

Die Schweißvorrichtung 1 aus Fig. 1 umfasst auch eine Steuereinrichtung 12, die mit dem Antrieb 8 verbunden ist und diesen automatisch steuert.

In der dargestellten Form weist die Schweißvorrichtung 1 zumindest zwei Gehäuseteile 14, 15 auf, die relativ zueinander bewegbar sind, um in einer Arbeitsstellung eine Kammer 21 (Fig. 4) um den Arbeitsbereich 4 zu bilden. Dabei ist einer der Induktorteile 6 in einem der Gehäuseteile 14 und ein anderer Induktorteil 7 in einem anderen Gehäuseteil 15 integriert. Die Induktorteile 6, 7 sitzen vorzugsweise jeweils an der Innenwand der Gehäuseteile 14, 15.

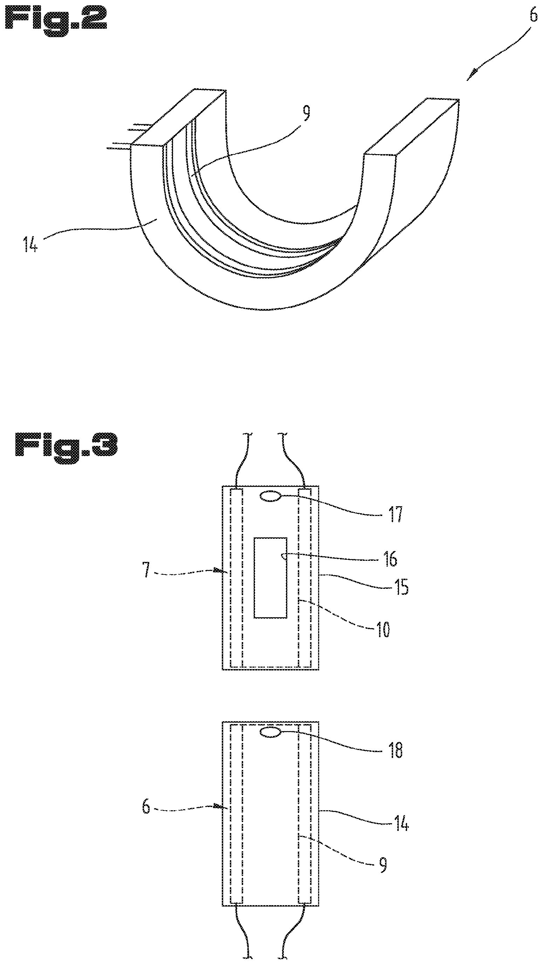

Wie aus Fig. 2 zu sehen, sind die Gehäuseteile in Halbschalenform ausgebildet und können so eine mehr oder weniger geschlossene Kammer 21 um den Arbeitsbereich 4 bilden.

Wie aus Fig. 3 zu sehen ist, in der die Gehäuseteile von außen (oben und unten) abgebildet sind, weist einer der Gehäuseteile 14 einen Einlass 17 für die Zufuhr eines Spülmediums (z.B. Schutzgas) auf. Der andere Gehäuseteil 15 weist einen Auslass 18 für die Abfuhr eines Spülmediums auf. Einer der Gehäuseteile 15 weist eine Arbeitsöffnung 16 auf, durch die Wärmeenergie von dem außerhalb der Kammer 21 angeordneten Schweißkopf 2, insbesondere in Form eines Laserstrahles, zum Werkstück 3 gelangen kann (siehe auch Fig. 4).

Im Arbeitsbereich 4 ist ein Temperatursensor 13 angeordnet, der vorzugsweise an einem Induktorteil 7 angekoppelt ist und innerhalb des Gehäuseteils 15 sitzt.

Die Windungsanzahl des Induktors 5 in Bezug auf den Arbeitsbereich (4) ist vorzugsweise symmetrisch, z.B. jeweils eine Windung links und rechts der Schweißstelle (Fig. 4).

Fig. 5 zeigt eine besonders bevorzugte Form, bei der das Gehäuse bzw. das gehäuseartige Gebilde von einer thermischen Isolation 20 umgeben ist. Alternativ könnte das Gehäuse 14, 15 selbst aus thermisch isolierendem Material gebildet sein. Auch zu sehen ist die Möglichkeit den Schweißstrahl zwischen den Gehäuseteilen 14, 15 in die Kammer 21 einzubringen.

Die Steuereinrichtung 12 ist auch mit einer Stromversorgung 11 des Induktors 5, mit dem Schweißkopf 2 und gegebenenfalls mit dem Temperatursensor 13 verbunden, um einen automatisierten Prozessablauf zu gewährleisten.

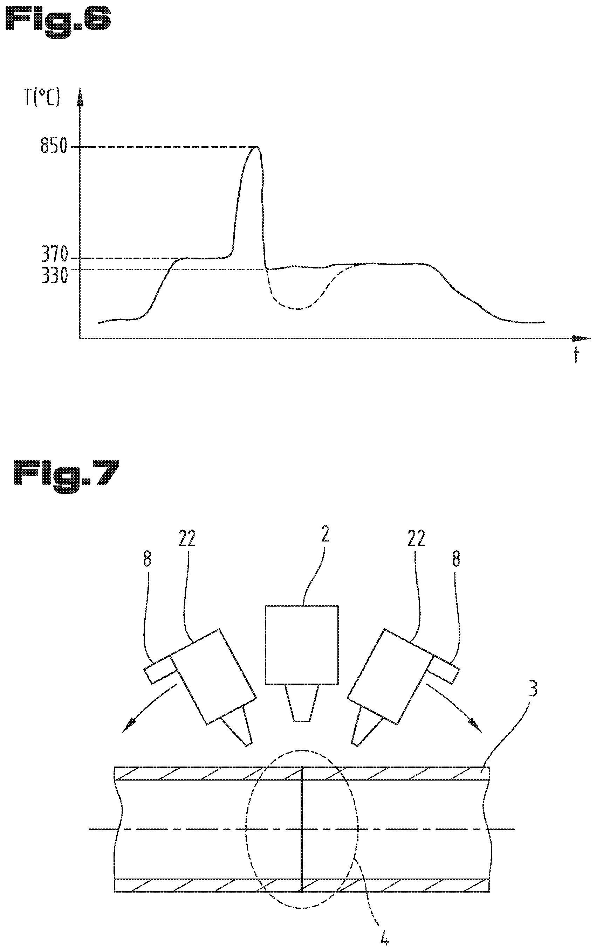

Wie im Form der Fig. 7 dargestellt kann die Heizeinrichtung 22 auch eine Strahlungsquelle sein, insbesondere eine Laserquelle, die vorzugsweise durch einen Antrieb 8 um den Arbeitsbereich 4 drehbar ist, z.B. um die Längsachse des Werkstückes 3. Die Darstellung des Antriebes 8 ist rein schematisch und dient lediglich der Veranschaulichung. Auch hier kann es sich um einen Rotations- oder Linearantrieb handeln, der z.B. elektrisch, magnetisch, pneumatisch oder hydraulisch angetrieben wird.

Alternativ könnte die Heizeinrichtung auch Strahlumlenkmittel umfassen, die vom Schweißkopf 2 emittierte Strahlen umlenkt und auf den Arbeitsbereich 4 richtet. Auch wäre es denkbar, dass die Heizeinrichtung zumindest ein elektrisches Heizelement umfasst.

Besonders bevorzugt ist, wenn die zumindest eine Heizeinrichtung derart ausge-bildet ist, dass sie beidseits der Schweißstelle auf das Werkstück 3 wirkt, wie dies etwa in Fig. 4 dargestellt ist. Auch könnte eine erste Heizeinrichtung 5, 22 auf eine Seite der Schweißstelle wirkt und eine zweite Heizeinrichtung 5, 22 auf die andere Seite der Schweißstelle einwirken (Fig. 7).

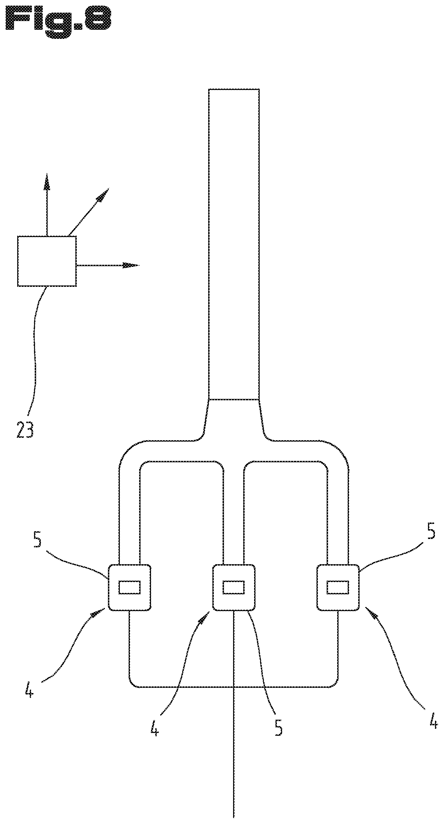

In der Form der Fig. 8 ist zu sehen, dass die Schweißvorrichtung 1 zumindest zwei (hier: drei) nebeneinander angeordnete Schweißplätze bzw. Schweißbahnen umfasst, die von zumindest einem Werkstückträger 23 mit zu schweißenden Werkstücken 3 oder Werkstückteilen bestückbar sind. Die Heizeinrichtung bzw. Heizeinrichtungen sind derart ausge-bildet, dass Werkstücke 3 oder Werkstückteile zeitlich getaktet mit der Heizeinrichtung erwärmbar sind, wobei vorzugsweise jeder Schweißplatz bzw. jede Schweißbahn eine eigene Heizeinrichtung umfasst.

Im Folgenden werden die bevorzugte Schweißverfahren näher beschrieben. Dabei handelt es sich um ein Schweißverfahren, insbesondere Laserschweißverfahren, zum Schweißen von Werkstücken 3 mit einer der vorhin beschriebenen Schweißvorrichtungen. Das Verfahren umfasst die Schritte: Positionieren eines zu schweißenden Werkstückes 3 im Arbeitsbereich 4 des Schweißkopfes; Durchführung des Schweißvorganges durch Betätigen des Schweißkopfes 2; und Wärmen des Werkstückes 3 durch die Heizeinrichtung 5, 22 vor, während und/oder nach dem Schweißvorgang.

Vorzugsweise handelt es sich um ein Schweißverfahren, insbesondere Laserschweißverfahren, zum Schweißen von metallischen Werkstücken 3 gekennzeichnet durch die Schritte: Positionieren eines zu schweißenden Werkstückes 3 im Arbeitsbereich 4 des Schweißkopfes 2 während sich der Induktor 5 in einer Öffnungsstellung befindet, in der die Induktorteile 6, 7 voneinander beabstandet sind; Relativbewegen der Induktorteile 6, 7 in die Arbeitsstellung, um das zu schweißende Werkstück 3 zu umschließen; Durchführung des Schweißvorganges durch Betätigen des Schweißkopfes 2; und Wärmen des Werkstückes 3 durch Bestromung des Induktors 5.

Vorzugsweise erfolgt ein Wärmen des Werkstückes 3 durch die Heizeinrichtung 5, 22 vor dem Schweißvorgang, wobei vorzugsweise die Dauer des Heizvorganges vor dem Schweißvorgang zumindest 0,01s (Sekunden), vorzugsweise zumindest 0,5s, besonders bevorzugt zumindest 1s beträgt. Besonders kurze Vorwärmzeiten sind mit einer Laserquelle als Heizeinrichtung zu erzielen.

Vorzugsweise erfolgt ein Wärmen des Werkstückes 3 durch die Heizeinrichtung 5, 22 während des Schweißvorganges.

Vorzugsweise erfolgt ein Wärmen des Werkstückes 3 durch die Heizeinrichtung 5, 22 nach dem Schweißvorgang, wobei vorzugsweise die Dauer des Heizvorganges nach dem Schweißvorgang zumindest 5s, vorzugsweise zumindest 10s beträgt.

An dieser Stelle sei bemerkt, dass die oben angeführten Zeitangaben rein exemplarisch sind und für eine bestimmte Konstellation (insbesondere bei Induktion) bevorzugt sein können. Die tatsächlich erforderlichen Vor- und/oder Nach-Wärmezeiten hängen jedoch von der Art des Material, von der Form des Materials und insbesondere von der Materialdicke ab. Anhand der Fig. 6 wird ein bevorzugter Arbeitsvorgang näher beschrieben. In einem ersten Schritt wird die Temperatur des Werkstückes 3 durch die Heizeinrichtung, z.B. den Induktor 5, auf einen Wert zwischen 300°C und 450°C, vorzugsweise auf einen Wert zwischen 320°C und 400°C (hier: 370°C) gebracht. In einem weiteren Schritt erfolgt der eigentliche Schweißvorgang durch Betätigung des Schweißkopfes 2. Hier werden je nach Material hohe Temperaturen erreicht (z.B. zwischen 800°C und 900°C, hier: 850°C, wobei wesentlich höhere Temperaturen möglich sind). In einem anschließenden Schritt wird unmittelbar nach dem Schweißvorgang das Werkstück durch die Heizeinrichtung auf einem Wert zwischen 250°C und 400°C, vorzugsweise auf einem Wert zwischen 300°C und 380°C (hier: 330°C) gehalten. Durch die Heizeinrichtung wird verhindert, dass die Temperatur nach dem Schweißvorgang in unerwünschter Weise stark abfällt, bevor ein Wärmebehandlungsschritt erfolgt (strichlierter Verlauf in Fig. 6).

In einer bevorzugten Form erfolgt vor, während und/oder nach dem Schweißvorgang eine Temperaturmessung durch einen im Arbeitsbereich 4 angeordneten Temperatursensor 13 (Fig. 1) und wird das Wärmen des Werkstückes 3 durch die Heizeinrichtung in Abhängigkeit der Temperaturmessung von einer Steuereinrichtung 12 geregelt.

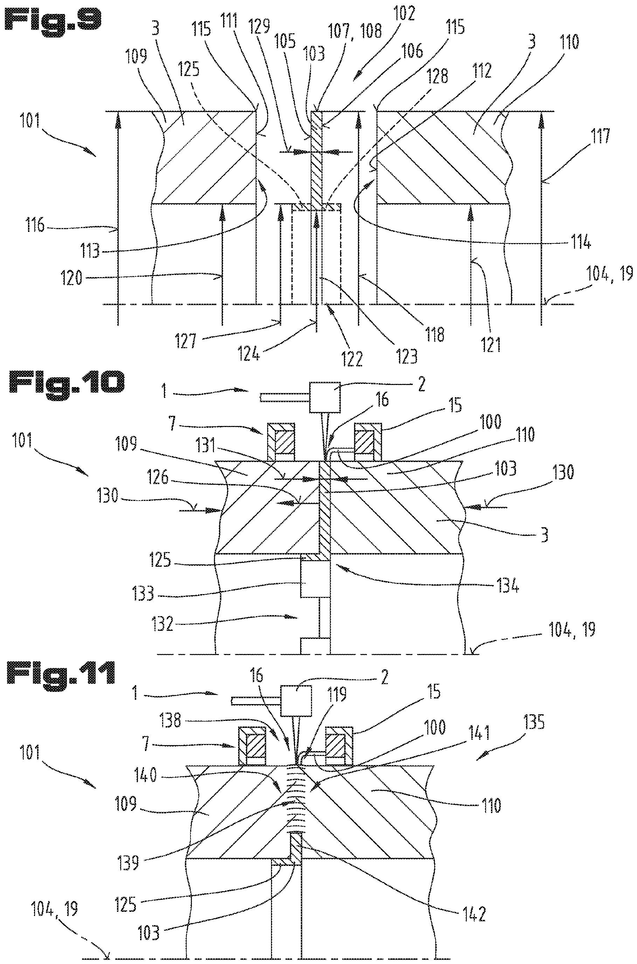

Fig. 9 zeigt eine Schnittansicht einer Schweißbauteilanordnung 101, wobei die Einzelteile dieser, welche in eine Explosionsdarstellung auseinander gezogen sind, in einem Halbschnitt dargestellt sind. Insbesondere ist ein Schweißzusatz 102 zur Herstellung der Schweißverbindung vorgesehen, welcher als Schweißzusatzkörper 103 geformt ist und somit eine definierte, exakte und reproduzierbare Form aufweist.

In der Variante nach Fig. 9 ist der Schweißzusatzkörper 103 als rotationssymmetrischer Bauteil ausgebildet, welcher eine Mittelachse 104 aufweist. Die Schnittführung wurde entlang dieser Mittelachse 104 gewählt. Der Einfachheit halber ist in der Ansicht nach Fig. 9 nur ein Viertel der rotationssymmetrischen Körper dargestellt, wobei die Mittelachse 104 als Darstellungsgrenze herangezogen wurde.

Wie aus Fig. 9 ersichtlich, weist der Schweißzusatzkörper 103 eine erste Anlagefläche 105 und eine zweite Anlagefläche 106 auf. Die beiden Anlageflächen 105, 106 sind an dessen Außenseite durch eine äußere Mantelfläche 107 begrenzt. Im dargestellten Ausführungsbeispiel, in welchem der Schweißzusatzkörper 103 als rotationssymmetrischer Körper ausgebildet ist, ist die äußere Mantelfläche 107 in Form einer Zylinderfläche 108 ausgebildet. Weiters sind in der Schnittdarstellung nach Fig. 9 ein erstes Bauteil 109 sowie ein zweites Bauteil 110 ersichtlich, welche unter Zuhilfenahme des Schweißzusatzes 102 in einem Schweißvorgang gefügt werden sollen. Die beiden Bauteile 109, 110 werden in diesem Dokument auch als Werkstück 3 bezeichnet. Das erste Bauteil 109 weist eine erste Fügefläche 111 auf, welche während des Fügevorganges mit der ersten Anlagefläche 105 des Schweißzusatzkörpers 103 zur Anlage gebracht wird. Das zweite Bauteil 110 weist eine zweite Fügefläche 112 auf, welche während des Fügevorganges mit der zweiten Anlagefläche 106 des Schweißzusatzkörpers 103 in Anlage gebracht wird.

Die beiden Bauteile 109, 110 sind vorzugsweise aus einem metallischen Werkstoff gebildet und weisen vorzugsweise dieselbe Legierungszusammensetzung oder Materialzusammensetzung auf. In Einzelfällen kann es aus möglich sein, dass die beiden Bauteile 109, 110 eine unterschiedliche Legierungszusammensetzung aufweisen.

Im dargestellten Beispiel aus Fig. 9 sind der Querschnitt 113 der ersten Fügefläche 111 und der Querschnitt 114 der zweiten Fügefläche 112 gleich groß gewählt bzw. ausgeführt. Aufgrund der Tatsache, dass im dargestellten Beispiel das erste Bauteil 109 sowie das zweite Bauteil 110 rotationssymmetrisch bezüglich der Mittelachse 104 ausgebildet sind, sind die Querschnitte 113, 114 der beiden Fügeflächen 111, 112 in Form eines Kreisringes ausgebildet.

Wie aus Fig. 9 weiters ersichtlich, ist die äußere Mantelfläche 107 des Schweißzusatzkörpers 103 an eine Außenkontur 115 der beiden Fügeflächen 111, 112 angepasst. Hierbei kann vorgesehen sein, dass ein Außendurchmesser 116 des ersten Bauteils 109 und ein Außendurchmesser 117 des zweiten Bauteiles 110 gleich groß gewählt sind. Weiters kann vorgesehen sein, dass ein Außendurchmesser 118 des Schweißzusatzkörpers 103 ebenfalls gleich groß gewählt ist wie die beiden Außendurchmesser 116, 117 der beiden Bauteile 109, 110. Dadurch kann erreicht werden, dass nach der Beendigung des Schweißvorganges eine schöne, und gleichmäßige Schweißnaht 119 ausgebildet ist, welche radial möglichst nicht oder nur geringfügig gegenüber den Außendurchmessern 116, 117 des ersten und des zweiten Bauteiles 109, 110 vorsteht. In weiteren Ausführungsvarianten kann es auch zweckmäßig sein, dass der Außendruchmesser 118 des Schweißzusatzkörpers 103 kleiner bzw. größer gewählt wird als die vergleichbaren Außendurchmesser 116, 117 des ersten und des zweiten Bauteils 109, 110. Von Vorteil ist hierbei, dass dadurch ein Materialschwund bzw. eine mögliche Materialexpansion während des Schweißvorganges ausgeglichen werden kann. Somit kann erreicht werden, dass die Schweißnaht 119 bei verschiedenen möglichen Kombinationen von verschiedenen Werkstoffen der Bauteile 109, 110 bzw. des Schweißzusatzes 102 immer eine schöne und gleichmäßige Form aufweist.

Wie aus Fig. 9 weiters ersichtlich, kann vorgesehen sein, dass die Bauteile 109, 110 als rotationssymmetrische Hohlkörper, etwa als Rohre, ausgebildet sind. Hierbei weisen die Bauteile 109, 110 einen Innendurchmesser 120, 121 auf. Derartige Rohre können beispielsweise als Transporteinhausungen für Fluide oder sonstiges verwendet werden.

Um auch den Schweißzusatzkörper 103 für derartige Fluide durchgängig zu machen, kann vorgesehen sein, dass in einem Zentralabschnitt 122 des Schweißzusatzkörpers 103 ein Durchbruch 123 vorgesehen ist, welcher in dessen Innendurchmesser 124 in etwa an die Innendurchmesser 120, 121 des ersten und des zweiten Bauteiles 109, 110 angepasst ist. Weiters kann, wie aus Fig. 9 ersichtlich, vorgesehen sein, dass am Schweißzusatzkörper 103 ein erster Positioniervorsprung 125 angeordnet ist, welcher in einer Normalrichtung 126 gegenüber der ersten Anlagefläche 105 vorstehend angeordnet ist. Dieser erste Positioniervorsprung 125 kann dazu dienen, um den Schweißzusatzkörper 103 während des Fügevorganges exakt am ersten Bauteil 109 positionieren zu können. Hierzu kann vorgesehen sein, dass ein Außendurchmesser 127 des ersten Positioniervorsprunges 125 in etwa gleich groß gewählt ist, wie der Innendurchmesser 120 des ersten Bauteiles 109. Vorzugsweise wird hier eine Übergangspassung gewählt, sodass der Schweißzusatzkörper 103 exakt positioniert werden kann und gegebenenfalls auch verrutschsicher im ersten Bauteil 109 aufgenommen ist.

Analog zum bereits beschriebenen ersten Positioniervorsprung 125 kann vorgesehen sein, dass ein zweiter Positioniervorsprung 128 ausgebildet ist, welcher gegenüber der zweiten Fügefläche 112 vorstehend angeordnet ist und somit zur Positionierung des zweiten Bauteiles 110 dient.

Weiters ist es auch möglich, dass der erste Positioniervorsprung 125 bzw. der zweite Positioniervorsprung 128 eine konische Außenoberfläche aufweisen, wodurch die Positioniereigenschaft gegenüber dem ersten Bauteil 109 bzw. dem zweiten Bauteil 110 verbessert wird. Eine Dicke 129 des Schweißzusatzkörpers 103 wird durch den Normalabstand der beiden Anlageflächen 105, 106 zueinander definiert. Die Dicke 129 des Schweißzusatzkörpers 103 ist maßgeblich für die Parameter der Schweißnaht 119 und beträgt vorzugsweise in etwa zwischen 0,5 und 5 mm.

Fig. 10 zeigt ein weiteres Beispiel der Schweißbauteilanordnung 101, insbesondere die beiden Bauteile 109, 110 sowie den Schweißzusatzkörper 103 in einer Schnittdarstellung gemäß Fig. 9.

In der Darstellung nach Fig. 10 ist zusätzlich gezeigt, wie der zweite Induktorteil 7 bzw. der zweite Gehäuseteil 15 im Bereich der beiden Bauteile 109, 110 angeordnet sein können der erste Induktorteil 6 bzw. der erste Gehäuseteil 14 sind in Fig. 10 der Übersichtlichkeit halber nicht dargestellt, wobei davon ausgegangen wird, dass dem Fachmann klar ist, dass die Gesamtanordnung der Induktorteile 6, 7 und der Gehäuseteile 14, 15 gemäß Fig.4 aufgebaut ist. Weiters wird darauf hingewiesen, dass beim Fügen der einzelnen Bauteile zueinander vorgesehen sein kann, dass das erste Bauteil 109 bereitgestellt wird, beispielsweise von einer Haltevorrichtung gehaltert wird. Der Schweißzusatzkörper 103 kann mittels einer Haltevorrichtung 100 am ersten Bauteil 109 appliziert werden bzw. relativ zum ersten Bauteil 109 positioniert werden. Eine derartige Haltevorrichtung 100 kann beispielsweise in den ersten oder zweiten Induktorteil 6, 7 oder in den ersten oder zweiten Gehäuseteil 14, 15 integriert sein, oder an diesem appliziert sein. Natürlich muss die Haltevorrichtung 100 dermaßen ausgebildet sein, dass sie den Schweißvorgang nicht stört. Hierbei wird ausdrücklich darauf hingewiesen, dass in der Darstellung nach Fig. 10 und Fig. 11 die Haltevorrichtung 100 nur schematisch angedeutet ist und natürlich an anderer Stelle positioniert sein kann, bzw. anders ausge-bildet sein kann. In einer weiteren Ausführungsvariante ist es auch möglich, dass die Haltevorrichtung 100 an anderer Stelle der Schweißvorrichtung 1 angeordnet ist.

In der Ansicht nach Fig. 10 sind die beiden Bauteile 109, 110 mit dem Schweißzusatzkörper 103 zusammengefügt sind und liegen an diesem an. Dieser Zustand bzw. Positionierung der Schweißbauteilanordnung 101 bildet die Basis für den Start des Schweißvorganges.

Um die Positionierung des Schweißzusatzkörpers 103 relativ zum ersten Bauteil 109 zu erleichtern, kann der erste Positioniervorsprung 125 am Schweißzusatzkörper 103 angeordnet sein, welcher mit dem ersten Bauteil 109 zusammenwirkt. Weiters kann vorgesehen sein, dass anschließend das zweite Bauteil 110 relativ zum ersten Bauteil 109 bzw. relativ zum Schweißzusatzkörper 103 positioniert bzw. am Schweißzusatzkörper 103 angelegt wird.

Weiters kann vorgesehen sein, dass sowohl auf den ersten Bauteil 109 als auch auf den zweiten Bauteil 110 eine Druckkraft 130 appliziert wird, welche beiden Druckkräfte 130 aufeinander zugerichtet sind, sodass die beiden Bauteile 109, 110 aufeinander zugedrückt werden. Somit können die beiden Bauteile 109, 110 an den zwischenliegenden Schweißzusatzkörper 103, insbesondere an dessen Anlageflächen 105, 106 angepresst werden. Wie aus Fig. 10 ersichtlich, wird durch den Schweißzusatzkörper 103 ein Normalabstand 131 hergestellt, in welchem die erste Fügefläche 111 des ersten Bauteiles 109 und die zweite Fügefläche 112 des zweiten Bauteiles 110 voneinander beabstandet sind. Hierbei ist aufgrund der Geometrie des Schweißzusatzkörpers 103, der Normalabstand 131 gleich groß wie die Dicke 129 des Schweißzusatzkörpers 103.

Im Gegensatz zur Darstellung aus Fig. 9 wird in Fig. 10 ein Schweißzusatzkörper 103 verwendet, welcher nur einen ersten Positioniervorsprung 125 aufweist. Hierbei kann vorgesehen sein, dass der erste Positioniervorsprung 125 nicht wie in Fig. 9 durch einen umlaufenden Ringmantel gebildet wird, sondern eine oder mehrere Ausnehmungen 132 aufweist, wodurch eine oder mehrere Klauen 133 ausgebildet sind. Hierdurch kann sich die klauenkupplungähnliche Form ergeben, wie sie in Fig. 10 dargestellt ist.

Sind das erste Bauteil 109 bzw. das zweite Bauteil 110, wie aus Fig. 10 ersichtlich, in Form eines Hohlprofiles ausgebildet und werden stirnseitig aneinander gedrückt, so bilden sie, wie aus Fig. 10 gut ersichtlich, einen Stumpfstoß 134, an welchem die Schweißnaht 119 gebildet wird.

Fig. 11 zeigt ein weiteres Beispiel der Schweißbauteilanordnung 101, insbesondere die beiden Bauteile 109, 110 sowie den Schweißzusatzkörper 103 in einer Schnittdarstellung gemäß Fig. 9. Die beiden Bauteile 109, 110 bzw. der Schweißzusatzkörper 103 sind in Fig. 11 in einem verschweißten Zustand dargestellt und bilden somit eine Baugruppe 135 aus. In der dem Ausführungsbeispiel nach Fig. 11 eingesetzte Schweißzusatzkörper 103 weist einen ersten Positioniervorsprung 125 in Form eines umlaufenden Kreisringes auf.

Wie aus Fig. 11 ersichtlich, kann vorgesehen sein, dass eine Schweißvorrichtung 1 ausgebildet ist, welche zum Verschweißen der Schweißbauteilanordnung 101 dient und einen Schweißkopf 2 umfasst. Vom Schweißkopf 2 kann ein Energiestrahl 138 abgegeben werden, welche die nötige Wärmemenge für die Verschweißung in die beiden Bauteile 109, 110 bzw. in dem Schweißzusatzkörper 103 einbringt. Der Energiestrahl 138 kann je nach gewähltem Schweißverfahren durch unterschiedliche Medien gebildet werden.

Mögliche Schweißverfahren, in welchen der Einsatz des erfindungsgemäßen Schweißzusatzkörpers als besonders vorteilhaft erscheint sind beispielsweise das Laserschweißen, das Elektronenstrahlschweißen, das Plasmaschweißen und hier im speziellen Plasma-Stichlochschweißen, defokussiertem Elektronenstrahlschweißen, und dergleichen.

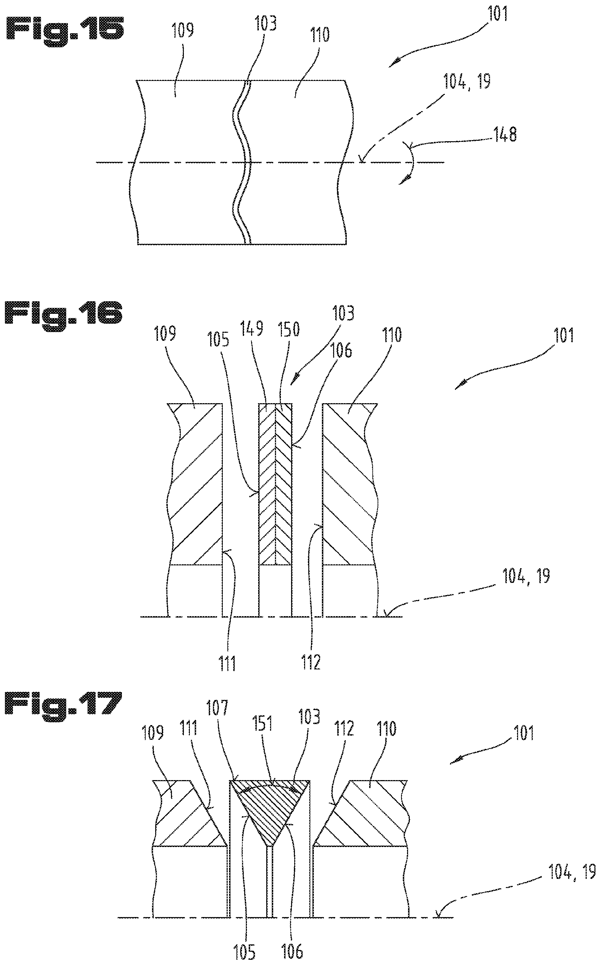

Während des Schweißvorganges kann vorgesehen sein, dass entweder der Schweißkopf 2 relativ zur Baugruppe 135 bewegt wird und diese stillsteht, oder dass der Schweißkopf 2 stillsteht und die Baugruppe 135 bewegt wird. Beispielsweise kann die Baugruppe 135 während des Schweißvorganges um die Mittelachse 104 rotiert werden. Alternativ dazu kann auch vorgesehen sein, dass sowohl der Schweißkopf 2 als auch die Baugruppe 135 während des Schweißvorganges bewegt wird. Dies kann etwa notwendig sein zur Herstellung einer Baugruppe 135 mit einem lamellenförmigen Schweißzusatzkörper 103, wie sie in Fig. 15 gezeigt bzw. beschrieben ist.

Wie aus Fig. 11 weiters ersichtlich, kann vorgesehen sein, dass die Energieeinbringung durch den Schweißkopf 2 dermaßen dosiert bzw. gewählt ist, dass nur ein äußerer Randabschnitt 139 des Schweißzusatzkörpers 103 bzw. daran anschließend ein erster Teilabschnitt 140 des ersten Bauteiles 109 und ein zweiter Teilabschnitt 141 des zweiten Bauteiles 110 aufgeschmolzen wird. Dadurch kann erreicht werden, dass ein Innenabschnitt 142 des Schweißzusatzkörpers 103 nicht aufgeschmolzen wird und somit formstabil bleibt, wodurch dieser während des Schweißvorganges einen zumindest annähernd konstanten Normalabstand 131 aufrecht erhalten kann. Dieser Normalabstand 131 wird selbst bei Veränderung der Druckkraft 130 nicht verändert. Der Normalabstand 131 kann sich jedoch geringfügig dadurch verändern, dass es aufgrund von Temperaturveränderungen zu Wärmedehnungen im Schweißzusatzkörper 103 bzw. in den Bauteilen 109, 110 kommt.

Alternativ dazu kann natürlich auch vorgesehen sein, dass der Schweißzusatzkörper 103 während des Schweißvorganges zur Gänze aufgeschmolzen wird und somit eine homogene Materialverbindung mit den beiden Bauteilen 109, 110 bildet.

In wieder einer anderen Variante kann auch vorgesehen sein, dass der Schweißkopf 2 im inneren der Bauteile 109, 110 für die nötige Energieeinbringung sorgt um die Schweißnaht 119 von zwei Seiten oder etwa nur durch Energieeinbringung auf der Innenseite herstellen zu können. Weiters kann auch vorgesehen sein, dass aus Platzgründen der Schweißkopf 2 außerhalb der beiden Bauteilen 109, 110 platziert ist und die Energiestrahl, etwa ein Laserstrahl über Spiegelelemente umgelenkt wird.

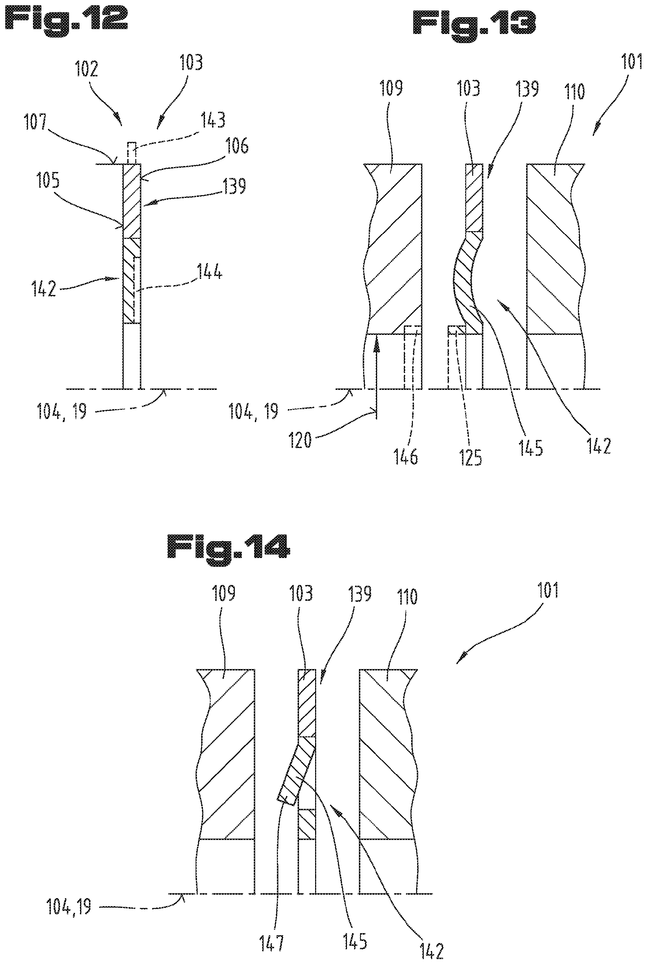

Fig. 12 zeigt ein weiteres Beispiel eines Schweißzusatzkörpers 103 gemäß einer Schnittdarstellung nach Fig. 1. Wie in diesem Ausführungsbeispiel dargestellt, kann vorgesehen sein, dass der Schweißzusatzkörper 103 im äußeren Randabschnitt 139 eine erste Materialzusammensetzung aufweist und im Innenabschnitt 142 eine zweite Materialzusammensetzung aufweist. Dies kann den Vorteil mit sich bringen, dass beispielsweise in der ersten Materialzusammensetzung des äußeren Randabschnittes 139 eine Verteilung von Legierungselementen verwendet werden kann, welche bezüglich der Verteilung von Legierungselementen in der zweiten Materialzusammensetzung des Innenabschnittes 142 unterschiedlich ist. Weiters kann vorgesehen sein, dass die beiden Materialzusammensetzungen verschiedene Schmelztemperaturen aufweisen, wodurch erreicht werden kann, dass erreichen einer gleichen Temperatur durch große Wärmemengeneinbringung beispielsweise nur der äußere Randabschnitt 139 aufgeschmolzen wird.

Weiters und unabhängig von der Materialzusammensetzung kann vorgesehen sein, dass an der äußeren Mantelfläche 107 des Schweißzusatzkörpers 103 ein Haltezapfen 143 angeordnet ist, welcher in Fig. 12 schematisch dargestellt ist. Dieser Haltezapfen 143 kann dazu dienen, um den Schweißzusatzkörper 103 halten bzw. manipulieren zu können.

Wieder unabhängig davon kann vorgesehen sein, dass im Schweißzusatzkörper 103 ein oder mehrere Kühlkanäle 144 ausgebildet sind, welche zur Wärmeverteilung bzw. zur Wärmeleitung im Schweißzusatzkörper 103 dienen. Diese Kühlkanäle 144 können entweder im Bereich der beiden Anlageflächen 105, 106, insbesondere im äußeren Randabschnitt 139 ausgebildet sein. Weiters ist es auch möglich, dass die Kühlkanäle 144 im Innenabschnitt 142 ausgebildet sind.

Fig. 13 zeigt ein weiteres Beispiel einer Schweißbauteilanordnung 101 gemäß einer Schnittdarstellung nach Fig. 9. In diesem Ausführungsbeispiel ist im Schweißzusatzkörper 103 ein elastisches Federelement 145 ausgebildet. Das Federelement 145 kann beispielsweise im Innenabschnitt 142 ausgebildet sein, wobei es, wie aus Fig. 13 ersichtlich, durch Materialverformung oder Formgebung in Form einer Ausbauchung oder etwa in Lamellenform bzw. in Wellenform ausgeformt sein kann. Dadurch kann erreicht werden, dass beim Aneinanderfügen der beiden Bauteile 109, 110 eine gewisse Vorspannkraft appliziert wird. Bei einem Verschweißvorgang wird nur der äußere Randabschnitt 139 mit den beiden Bauteilen 109, 110 verschmolzen und der Innenabschnitt 142, welcher als Federelement 145 ausge-bildet ist, wird nicht aufgeschmolzen. Dadurch kann die durch das Federelement 145 aufgebrachte Vorspannung zwischen den beiden Bauteilen 109, 110 auch nach Beendigung des Schweißvorganges aufrecht gehalten, beziehungsweise gespeichert werden.

Wie aus Fig. 13 weiters ersichtlich, kann vorgesehen sein, dass zumindest am ersten Bauteil 109 eine Ausnehmung 146 vorgesehen ist, in welche der Positioniervorsprung 125 des Schweißzusatzkörpers 103 eingebracht werden kann. Dadurch kann erreicht werden, dass der Schweißzusatzkörper 103 gegenüber dem Innendurchmesser 120 des ersten Bauteils 109 nicht nach innen vorsteht und somit auch nach dem Verschweißen der gesamte Innenraum zur Durchströmung von einem Fluid zur Verfügung steht.

Fig. 14 zeigt ein weiteres Beispiel einer Schweißbauteilanordnung 101 gemäß einer Schnittdarstellung nach Fig. 9, wobei in diesem Beispiel das Federelement 145 durch einen mechanischen Bearbeitungsvorgang, wie etwa einem Stanzvorgang, hergestellt wurde. Dadurch können mehrere Laschen 147 ausgebildet sein, welche eine mögliche Vorspannkraft aufbringen können.

Fig. 15 zeigt in einer Vorderansicht weiteres Beispiel einer Schweißbauteilanordnung 101 gemäß einer Schnittdarstellung nach Fig. 1, wobei bei diesem Ausführungsbeispiel der Schweißzusatzkörper 103 bzw. die Fügeflächen 111, 112 der beiden Bauteile 109, 110 lamellenförmig ausgebildet sind und wie in Fig. 15 dargestellt aneinander gefügt werden. Die Bauteile 109, 110 können hierbei die Außenform einer Welle oder einer Hohlwelle, etwa eines Rohres aufweisen. Die Lamellenform kann besonders vorteilhaft sein, wenn zwei Bauteile 109, 110 miteinander verbunden werden, welche zum Übertragen eines Torsionsmomentes ausgebildet bzw. angedacht sind.

Fig. 16 zeigt ein weiteres Beispiel einer Schweißbauteilanordnung 101, wobei vorgesehen sein kann, dass der Schweißzusatzkörper 103 im Bereich der ersten Anlagefläche 105 einen ersten Anlageflächenabschnitt 149 aufweist, welcher eine erste Materialzusammensetzung aufweist, und im Bereich der zweiten Anlagefläche 106 einen zweiten Anlageflächenabschnitt 150 aufweist, welcher eine zweite Materialzusammensetzung besitzt. Dies kann vorteilhaft sein, wenn beispielsweise ein erster Bauteil 109 und ein zweiter Bauteil 110 miteinander verschweißt werden sollen, welche eine unterschiedliche Materialzusammensetzung bzw. unterschiedliche Legierungskomponenten aufweisen. Dadurch kann erreicht werden, dass im aufgeschmolzenen Zustand der erste Anlageflächenabschnitt 149 besonders gut mit dem ersten Bauteil 109 einer ersten Legierung verbindet und der zweite Anlageflächenabschnitt 150 besonders gut mit einem zweiten Bauteil 110 mit einer zweiten Legierung verbindet.

Fig. 17 zeigt ein weiteres Beispiel einer Schweißbauteilanordnung 101. Wie aus Fig. 17 ersichtlich, kann vorgesehen sein, dass der Schweißzusatzkörper 103 nicht zwei parallel zueinander ausgerichtete Anlageflächen 105, 106 aufweist, sondern dass diese in einem Winkel 151 zueinander angeordnet sind. Somit kann erreicht werden, dass eine Art V-Naht ausgebildet werden kann, wobei außen durch größeren Wärmeeintrag eine breitere Schweißnaht 119 erzeugt werden kann, wie an der Wurzel oder Innenseite.

**Bezugszeichenaufstellung**

| | | | |
|---|---|---|---|
| 1 | Schweißvorrichtung | 106 | zweite Anlagefläche |
| 2 | Schweißkopf | 107 | äußere Mantelfläche |
| 3 | Werkstück | 108 | Zylinderfläche |
| 4 | Arbeitsbereich | 109 | erstes Bauteil |
| 5 | Induktor | 110 | zweites Bauteil |
| 6 | Erster Induktorteil | 111 | erste Fügefläche |
| 7 | Zweiter Induktorteil | 112 | zweite Fügefläche |
| 8 | Antrieb | 113 | Querschnitt erste Fügefläche |
| 9 | Windung | 114 | Querschnitt zweite Fügefläche |
| 10 | Windung | 115 | Außenkontur einer Fügefläche |
| 11 | Stromversorgung | 116 | Außendurchmesser erstes Bauteil |
| 12 | Steuereinrichtung | 117 | Außendurchmesser zweites Bauteil |
| 13 | Temperatursensor | | |
| 14 | erster Gehäuseteil | 118 | Außendurchmesser Schweißzusatzkörper |
| 15 | zweiter Gehäuseteil | | |
| 16 | Arbeitsöffnung | 119 | Schweißnaht |
| 17 | Einlass | 120 | Innendurchmesser erstes Bauteil |
| 18 | Auslass | 121 | Innendurchmesser zweites Bauteil |
| 19 | Achse des Induktors 5 | 122 | Zentralabschnitt |
| 20 | Isolierung | 123 | Durchbruch |
| 21 | Kammer | 124 | Innendurchmesser Durchbruch |
| 22 | Strahlungsquelle | 125 | erster Positioniervorsprung |
| 23 | Werkstückträger | 126 | Normalrichtung |
| | | 127 | Außendurchmesser erster Positioniervorsprung |
| 100 | Haltevorrichtung | | |
| 101 | Schweißbauteilanordnung | 128 | zweiter Positioniervorsprung |
| 102 | Schweißzusatz | 129 | Dicke des Schweißzusatzkörpers |
| 103 | Schweißzusatzkörper | 130 | Druckkraft |
| 104 | Mittelachse | 131 | Normalabstand |
| 105 | erste Anlagefläche | 132 | Ausnehmung |
| 133 | Klauen | | |
| 134 | Stumpfstoß | | |
| 135 | Baugruppe | | |
| 136 | | | |
| 137 | | | |
| 138 | Energie strahl | | |
| 139 | äußerer Randabschnitt | | |
| 140 | erster Teilabschnitt erster Bauteil | | |
| 141 | zweiter Teilabschnitt zweiter Bauteil | | |
| 142 | Innenabschnitt | | |
| 143 | Haltezapfen | | |
| 144 | Kühlkanal | | |
| 145 | Federelement | | |
| 146 | Ausnehmung | | |
| 147 | Lasche | | |
| 148 | Torsionsmoment | | |
| 149 | erster Anlageflächenabschnitt | | |
| 150 | zweiter Anlageflächenabschnitt | | |
| 151 | Winkel Anlageflächen | | |

## Patentansprüche

1. Schweißvorrichtung (1), insbesondere Laserschweißvorrichtung, zum Schweißen von Werkstücken (3), mit zumindest einem Schweißkopf (2), insbesondere Laserschweißkopf, der in der Arbeitsstellung auf einen Arbeitsbereich (4) gerichtet ist, und mit zumindest einer auf den Arbeitsbereich (4) wirkenden Heizeinrichtung (5) zum Erwärmen des Werkstückes (3), insbesondere vor und/oder nach dem Schweißvorgang, **dadurch gekennzeichnet, dass** die Schweißvorrichtung (1) zumindest zwei nebeneinander angeordnete Schweißplätze bzw. Schweißbahnen umfasst, die von zumindest einem Werkstückträger (23) mit zu schweißenden Werkstücken (3) oder Werkstückteilen bestückbar sind, und dass die zumindest eine Heizeinrichtung (5, 22) derart ausgebildet ist, dass Werkstücke (3) oder Werkstückteile zeitlich getaktet mit der Heizeinrichtung (5, 22) erwärmbar sind.

2. Schweißvorrichtung nach Anspruch 1, **dadurch gekennzeichnet, dass** die Heizeinrichtung (5, 22) oder zumindest ein Teil (6, 7) der Heizeinrichtung (5, 22) relativ zum Arbeitsbereich (4) bewegbar ist, wobei vorzugsweise die Heizeinrichtung (5, 22) oder zumindest ein Teil (6, 7) der Heizeinrichtung (5, 22) mit einem Antrieb (8) verbunden und durch diesen antreibbar ist.

3. Schweißvorrichtung nach Anspruch 1 oder 2, **dadurch gekennzeichnet, dass** die Heizeinrichtung zumindest einen im Arbeitsbereich (4) angeordneten Induktor (5) zum Erwärmen des Werkstückes (3) durch Induktion umfasst.

4. Schweißvorrichtung nach Anspruch 3, **dadurch gekennzeichnet**, der Induktor (5) aus zumindest zwei Induktorteilen (6, 7) gebildet wird, die relativ zueinander bewegbar sind, um in einer Arbeitsstellung ein zu schweißendes Werkstück (3) zu umschließen und in einer Öffnungsstellung, in der die Induktorteile (6, 7) voneinander beabstandet sind, das Werkstück (3) freizugeben.

5. Schweißvorrichtung nach Anspruch 4, **dadurch gekennzeichnet, dass** die Induktor-teile (6, 7) in Richtung quer, vorzugsweise senkrecht zur Achse (19) des Induktors (5) relativ zueinander bewegbar sind.

6. Schweißvorrichtung nach einem der Ansprüche 3 bis 5, **dadurch gekennzeichnet, dass** zumindest einer der Induktorteile (6, 7) mit einem Antrieb (8) verbunden und durch diesen relativ zum anderen Induktorteil (7, 6) antreibbar ist.

7. Schweißvorrichtung nach einem der Ansprüche 2 bis 6, **dadurch gekennzeichnet, dass** die Schweißvorrichtung (1) eine Steuereinrichtung (12) umfasst, die mit dem Antrieb (8) verbunden ist und diesen automatisch steuert.

8. Schweißvorrichtung nach einem der Ansprüche 3 bis 7, **dadurch gekennzeichnet, dass** die Schweißvorrichtung (1) zumindest zwei Gehäuseteile (14, 15) aufweist, die relativ zueinander bewegbar sind, um in einer Arbeitsstellung eine Kammer (21) um den Arbeitsbereich (4) zu bilden, und dass einer der Induktorteile (6) in einem der Gehäuseteile (14) und ein anderer Induktorteil (7) in einem anderen Gehäuseteil (15) integriert ist.

9. Schweißvorrichtung nach Anspruch 8, **dadurch gekennzeichnet, dass** die Induktor-teile (6, 7) jeweils an der Innenwand der Gehäuseteile (14, 15) sitzen.

10. Schweißvorrichtung nach Anspruch 8 oder 9, **dadurch gekennzeichnet, dass** zumindest einer der Gehäuseteile (14) einen Einlass (17) für die Zufuhr eines Spülmediums aufweist.

11. Schweißvorrichtung nach einem der Ansprüche 8 bis 10, **dadurch gekennzeichnet, dass** zumindest einer der Gehäuseteile (15) einen Auslass (18) für die Abfuhr eines Spülmediums aufweist.

12. Schweißvorrichtung nach einem der Ansprüche 8 bis 11, **dadurch gekennzeichnet, dass** zumindest einer der Gehäuseteile (14, 15) eine Arbeitsöffnung (16) aufweist, durch die Wärmeenergie von dem außerhalb der Kammer angeordneten Schweißkopf (2), insbesondere in Form eines Laserstrahles, zum Werkstück (3) gelangen kann.

13. Schweißvorrichtung nach einem der vorhergehenden Ansprüche, **dadurch gekennzeichnet, dass** im Arbeitsbereich (4) ein Temperatursensor (13) angeordnet ist, der vorzugsweise an einem der Induktorteile (6, 7) angekoppelt ist.

14. Schweißvorrichtung nach einem der Ansprüche 3 bis 13, **dadurch gekennzeichnet, dass** die Windungsanzahl des Induktors (5) in Bezug auf den Arbeitsbereich (4) symmetrisch ist.

15. Schweißvorrichtung nach einem der Ansprüche 3 bis 14, **dadurch gekennzeichnet, dass** die Schweißvorrichtung (1) eine Steuereinrichtung (12) umfasst, die mit einer Stromversorgung (11) des Induktors (5), mit dem Schweißkopf (2) und gegebenenfalls mit dem Temperatursensor (13) verbunden ist.

16. Schweißvorrichtung nach einem der vorhergehenden Ansprüche, **dadurch gekennzeichnet, dass** die Heizeinrichtung (22) eine Strahlungsquelle, insbesondere eine Laserquelle, ist, wobei vorzugsweise die Strahlungsquelle durch einen Antrieb (8) um den Arbeitsbereich (4) drehbar ist.

17. Schweißvorrichtung nach einem der vorhergehenden Ansprüche, **dadurch gekennzeichnet, dass** die Heizeinrichtung Strahlumlenkmittel umfasst, die vom Schweißkopf (2) emittierte Strahlen umlenkt und auf den Arbeitsbereich (4) richtet.

18. Schweißvorrichtung nach einem der vorhergehenden Ansprüche, **dadurch gekennzeichnet, dass** die Heizeinrichtung zumindest ein elektrisches Heizelement umfasst.

19. Schweißvorrichtung nach einem der vorhergehenden Ansprüche, **dadurch gekennzeichnet, dass** die zumindest eine Heizeinrichtung derart ausgebildet ist, dass sie beidseits der Schweißstelle auf das Werkstück (3) wirkt.

20. Schweißvorrichtung nach einem der vorhergehenden Ansprüche, **dadurch gekennzeichnet, dass** eine erste Heizeinrichtung (5, 22) auf eine Seite der Schweißstelle wirkt und eine zweite Heizeinrichtung (5, 22) auf die andere Seite der Schweißstelle wirkt.

21. Schweißvorrichtung nach einem der vorhergehenden Ansprüche, **dadurch gekennzeichnet, dass** jeder Schweißplatz bzw. jede Schweißbahn eine eigene Heizeinrichtung (5, 22) umfasst.

22. Schweißvorrichtung nach einem der vorhergehenden Ansprüche, **dadurch gekennzeichnet, dass** die Schweißvorrichtung (1) eine Haltevorrichtung (100) umfasst mittels welcher ein Schweißzusatz (102) zwischen einer ersten Fügefläche (111) eines ersten Bauteiles (109) und einer zweiten Fügefläche (112) eines zweiten Bauteiles (110) einbringbar ist, wobei der Schweißzusatz (102) als geformter Schweißzusatzkörper (103) ausgebildet ist, der eine erste Anlagefläche (105) aufweist, welche an die erste Fügefläche (111) des ersten Bauteiles (109) anlegbar ist und eine zweite Anlagefläche (106) aufweist, welche an die zweite Fügefläche (112) des zweiten Bauteiles (110) anlegbar ist.

23. Schweißverfahren, insbesondere Laserschweißverfahren, zum Schweißen von Werkstücken (3) mit einer Schweißvorrichtung nach einem der vorhergehenden Ansprüche, **gekennzeichnet durch** die Schritte: Positionieren eines zu schweißenden Werkstückes (3) im Arbeitsbereich (4) des Schweißkopfes; Durchführung des Schweißvorganges durch Betätigen des Schweißkopfes (2); und Wärmen des Werkstückes (3) durch die Heizeinrichtung (5) vor, während und/oder nach dem Schweißvorgang.

24. Schweißverfahren, insbesondere Laserschweißverfahren, zum Schweißen von metallischen Werkstücken (3) mit einer Schweißvorrichtung nach einem der Ansprüche 4 bis 15 **gekennzeichnet durch** die Schritte: Positionieren eines zu schweißenden Werkstückes (3) im Arbeitsbereich (4) des Schweißkopfes (2) während sich der Induktor (5) in einer Öffnungsstellung befindet, in der die Induktorteile (6, 7) voneinander beabstandet sind; Relativbewegen der Induktorteile (6, 7) in die Arbeitsstellung, um das zu schweißende Werkstück (3) zu umschließen; Durchführung des Schweißvorganges durch Betätigen des Schweißkopfes (2); und Wärmen des Werkstückes (3) durch Bestromung des Induktors (5)

25. Schweißverfahren nach Anspruch 23 oder 24, **dadurch gekennzeichnet, dass** ein Wärmen des Werkstückes (3) durch die Heizeinrichtung (5, 22) vor dem Schweißvorgang erfolgt.

26. Schweißverfahren nach Anspruch 25, **dadurch gekennzeichnet, dass** das Werkstück (3) während des Vorwärmens durch die Heizeinrichtung (5, 22) im Bereich der zukünftigen Schweißnaht auf eine Temperatur zwischen 300°C und 450°C, vorzugsweise zwischen 320°C und 400°C gebracht wird.

27. Schweißverfahren nach einem der Ansprüche 23 bis 26, **dadurch gekennzeichnet, dass** ein Wärmen des Werkstückes (3) durch die Heizeinrichtung (5, 22) während des Schweißvorganges erfolgt

28. Schweißverfahren nach einem der Ansprüche 23 bis 27, **dadurch gekennzeichnet, dass** ein Wärmen des Werkstückes (3) durch die Heizeinrichtung (5, 22) nach dem Schweißvorgang erfolgt.

29. Schweißverfahren nach Anspruch 28, **dadurch gekennzeichnet, dass** das Werkstück (3) während des Nachwärmens durch die Heizeinrichtung (5, 22) im Bereich der Schweißnaht auf einer Temperatur zwischen 250°C und 400°C, vorzugsweise zwischen 300°C und 380°C gehalten wird.

30. Schweißverfahren nach einem der Ansprüche 23 bis 29, **dadurch gekennzeichnet, dass** vor, während und/oder nach dem Schweißvorgang eine Temperaturmessung durch einen im Arbeitsbereich (4) angeordneten Temperatursensor (13) erfolgt und dass das Wärmen des Werkstückes (3) durch die Heizeinrichtung (5, 22) in Abhängigkeit der Temperaturmessung von einer Steuereinrichtung (12) geregelt wird.

31. Schweißverfahren nach einem der Ansprüche 23 bis 30, **dadurch gekennzeichnet, dass** im Schweißverfahren zusätzlich folgende Verfahrensschritte durchgeführt werden:
- Bereitstellen eines ersten Bauteiles (109);
- Bereitstellen eines als geformter Schweißzusatzkörper (103) ausgebildeten Schweißzusatzes (102) mit einer ersten (105) und einer zweiten Anlagefläche (106);
- Positionieren des Schweißzusatzkörpers (103), wobei die erste Anlagefläche (105) des Schweißzusatzkörpers (103) mit einer ersten Fügefläche (111) des ersten Bauteiles (109) zur Anlage gebracht wird;
- Positionieren eines zweiten Bauteiles (110) relativ bezüglich des ersten Bauteils (109), wobei eine zweite Fügefläche (112) eines zweiten Bauteiles (110) mit der zweiten Anlagefläche (106) des Schweißzusatzkörpers (103) zur Anlage gebracht wird.

32. Schweißverfahren nach Anspruch 31, **dadurch gekennzeichnet, dass** die beiden Bauteile (109, 110) vor und/oder während des Schweißvorgangs mit einer gegeneinander gerichteten Druckkraft (130) beaufschlagt und somit aneinander angedrückt werden.

33. Schweißverfahren nach einem der Ansprüche 31 bis 32, **dadurch gekennzeichnet, dass** die eingebrachte Wärmeenergie dermaßen bemessen wird, dass während des Schweißvorganges nur ein äußerer Randabschnitt (139) des Schweißzusatzkörpers (103), sowie die jeweils an den äußeren Randabschnitt (139) angrenzenden Teilabschnitte (140, 141) der beiden Bauteile (109, 110) aufgeschmolzen wird.

34. Schweißverfahren nach einem der Ansprüche 31 bis 33, **dadurch gekennzeichnet, dass** die beiden Fügeflächen (111, 112) der Bauteile (109, 110) mit einem zueinander in etwa gleichen Querschnitt (113, 114) ausgebildet werden und unter Ausbildung eines Normalabstandes (131), welcher von dem Schweißzusatzkörper (103) überbrückt wird, in Form eines Stumpfstoßes (134) benachbart nebeneinander angeordnet werden.

## Claims

1. A welding device (1), in particular a laser welding device, for welding workpieces (3), having at least one welding head (2), in particular laser welding head, which is directed onto a working area (4) when in the working position, and at least one heating device (5) acting on the working area (4) in order to heat up the workpiece (3), in particular before and/or after the welding operation, **characterized in that** the welding device (1) comprises at least two adjacently disposed welding stations or welding lines which can be set up with workpieces (3) or workpiece parts to be welded by means of at least one workpiece carrier (23) and that the least one heating device (5, 22) is configured so that the workpieces (3) or workpiece parts can be heated by the heating device (5, 22) in timed cycles.

2. The welding device according to claim 1, **characterized in that** the heating device (5, 22) or at least a part (6, 7) of the heating device (5, 22) can be moved relative to the working area (4), wherein the heating device (5, 22) or at least a part (6, 7) of the heating device (5, 22) is preferably connected to a drive (8) and can be driven by it.

3. The welding device according to claim 1 or 2, **characterized in that** the heating device comprises at least one inductor (5) disposed in the working area (4) for heating the workpiece (3) by induction.

4. The welding device according to claim 3, **characterized in that** the inductor (5) is formed from at least two inductor parts (6, 7) which can be moved relative to one another into a working position in order to enclose a workpiece to be welded (3) and into an open position in which the inductor parts (6, 7) are spaced apart from one another to release the workpiece (3).

5. The welding device according to claim 4, **characterized in that** the inductor parts (6, 7) can be moved relative to one another in the direction extending transversely to, preferably perpendicular to, the axis (19) of the inductor (5).

6. The welding device according to one of claims 3 to 5, **characterized in that** at least one of the inductor parts (6, 7) is connected to a drive (8) and can be driven by it relative to the other inductor part (7, 6).

7. The welding device according to one of claims 2 to 6, **characterized in that** the welding device (1) comprises a control unit (12) which is connected to the drive (8) and automatically controls it.

8. The welding device according to one of claims 3 to 7, **characterized in that** the welding device (1) has at least two housing parts (14, 15) which can be moved relative to one another in order to form a chamber (21) around the working area (4) when in a working position and that one of the inductor parts (6) is integrated in one of the housing parts (14) and another inductor part (7) is integrated in another housing part (15).

9. The welding device according to claim 8, **characterized in that** the inductor parts (6, 7) respectively sit against the internal wall of the housing parts (14, 15).

10. The welding device according to claim 8 or 9, **characterized in that** at least one of the housing parts (14) has an inlet (17) for feeding in a flushing medium.

11. The welding device according to one of claims 8 to 10, **characterized in that** at least one of the housing parts (15) has an outlet (18) for discharging a flushing medium.

12. The welding device according to one of claims 8 to 11, **characterized in that** at least one of the housing parts (14, 15) has a working opening (16) via which the thermal energy from the welding head (2) disposed outside the chamber, in particular in the form of a laser beam, can be directed onto the workpiece (3).

13. The welding device according to one of the preceding claims, **characterized in that** a temperature sensor (13) is disposed in the working area (4) which is preferably coupled with one of the inductor parts (6, 7).

14. The welding device according to one of claims 3 to 13, **characterized in that** windings of the inductor (5) are disposed symmetrically by reference to the working area (4) in terms of number.

15. The welding device according to one of claims 3 to 14, **characterized in that** the welding device (1) comprises a control unit (12) which is connected to a power supply (11) of the inductor (5), the welding head (2) and optionally the temperature sensor (13).

16. The welding device according to one of the preceding claims, **characterized in that** the heating device (22) is a radiation source, in particular a laser source, wherein the radiation source is preferably rotatable around the working area (4) by means of a drive (8).

17. The welding device according to one of the preceding claims, **characterized in that** the heating device comprises beam deflecting means which deflects the beams emitted by the welding head (2) and direct them onto the working area (4).

18. The welding device according to one of the preceding claims, **characterized in that** the heating device comprises at least one electric heating element.

19. The welding device according to one of the preceding claims, **characterized in that** the at least one heating device is configured so that it acts on the workpiece (3) on both sides of the welding point.

20. The welding device according to one of the preceding claims, **characterized in that** a first heating device (5, 22) acts on one side of the welding point and a second heating device (5, 22) acts on the other side of the welding point.

21. The welding device according to one of the preceding claims, **characterized in that** each welding station or each welding line preferably comprises a separate heating device (5, 22).

22. The welding device according to one of the preceding claims, **characterized in that** the welding device (1) comprises a retaining device (100) by means of which a filler metal (102) can be introduced between a first joint surface (111) of a first component (109) and a second joint surface (112) of a second component (110), wherein the filler metal (102) is configured in the form of a shaped filler metal body (103) having a first contact surface (105) which can be placed in contact with the first joint surface (111) of the first component (109) and having a second contact surface (106) which can be placed in contact with the second joint surface (112) of the second component (110).

23. A welding method, in particular a laser welding method, for welding workpieces (3) by means of a welding device according to one of the preceding claims, **characterized by** the steps: positioning a workpiece to be welded (3) in the working area (4) of the welding head; performing the welding operation by activating the welding head (2); and heating the workpiece (3) by means of the heating device (5) before, during and/or after the welding operation.

24. A welding method, in particular a laser welding method, for welding metal workpieces (3) by means of a welding device according to one of claims 4 to 15 **characterized by** the steps: positioning a workpiece to be welded (3) in the working area (4) of the welding head (2) whilst the inductor (5) is in an open position in which the inductor parts (6, 7) are spaced apart from one another; moving the inductor parts (6, 7) relatively into the working position in order to enclose the workpiece to be welded (3); performing the welding operation by activating the welding head (2); and heating the workpiece (3) by energizing the inductor (5).

25. The welding method according to claim 23 or 24, **characterized in that** the workpiece (3) is heated by means of the heating device (5, 22) before the welding operation.

26. The welding method according to claim 25, **characterized in that** during pre-heating by means of the heating device (5, 22), the workpiece (3) is brought to a temperature of between 300 °C and 450 °C, preferably between 320 °C and 400 °C, in the region of the future weld seam.

27. The welding method according to one of claims 23 to 26, **characterized in that** the workpiece (3) is heated by means of the heating device (5, 22) during the welding operation.

28. The welding method according to one of claims 23 to 27, **characterized in that** the workpiece (3) is heated by means of the heating device (5, 22) after the welding operation.

29. The welding method according to claim 28, **characterized in that** during reheating by means of the heating device (5, 22), the workpiece (3) is kept at a temperature of between 250 °C and 400 °C, preferably between 300 °C and 380 °C, in the region of the weld seam.

30. The welding method according to one of claims 23 to 29, **characterized in that** before, during and/or after the welding operation, a measurement is taken of the temperature by means of a temperature sensor (13) disposed in the working area (4) and heating of the workpiece (3) by means of the heating device (5, 22) is controlled by a control unit (12) depending on the temperature measurement.

31. The welding method according to one of claims 23 to 30, **characterized in that** the following method steps are additionally performed as part of the welding method:
- providing the first component (109);
- providing a filler metal (102) in the form of a shaped filler metal body (103) having a first (105) and a second contact surface (106);
- positioning the filler metal body (103), wherein the first contact surface (105) of the filler metal body (103) is placed in contact with a first joint surface (111) of the first component (109);
- positioning a second component (110) relative to the first component (109), wherein a second joint surface (112) of a second component (110) is placed in contact with the second contact surface (106) of the filler metal body (103).

32. The welding method according to claim 31, **characterized in that** before and/or during the welding operation, a compression force (130) is applied to the two components (109, 110) from opposite directions, thereby pushing them together.

33. The welding method according to one of claims 31 to 32, **characterized in that** the thermal energy applied can be measured in such a way that during the welding operation, only an outer edge off-cut (139) of the filler metal body (103) and the sections (140, 141) of the two components (109, 110) respectively adjoining the outer edge off-cut (139) are melted.

34. The welding method according to one of claims 31 to 33, **characterized in that** the two joint surfaces (111, 112) of the components (109, 110) have more or less the same cross-section (113, 114) as one another and are disposed next to one another forming a normal distance (131) which is bridged by the filler metal body (103) in the form of a butt joint (134).

## Revendications

1. Gabarit de soudage (1), en particulier gabarit de soudage laser, pour le soudage de pièces (3), avec au moins une tête de soudage (2), en particulier une tête de soudage laser, qui, dans la position de travail, est dirigée vers une zone de travail (4), et avec au moins un dispositif chauffant (5) agissant sur la zone de travail (4) pour chauffer la pièce (3), en particulier avant et/ou après le processus de soudage, **caractérisé en ce que** le gabarit de soudage (1) comprend au moins deux emplacements de soudage ou respectivement trajectoires de soudage juxtaposé(e)s qui peuvent être équipé(e)s de pièces (3) ou parties de pièces à souder par au moins un porte-pièce (23), et **en ce que** le dispositif chauffant (5, 22) au moins au nombre de un est constitué de telle sorte que des pièces (3) ou des parties de pièces peuvent être chauffées avec le dispositif chauffant (5, 22) de façon cadencée dans le temps.

2. Gabarit de soudage selon la revendication 1, **caractérisé en ce que** le dispositif chauffant (5,22) ou au moins une partie (6, 7) du dispositif chauffant (5, 22) est mobile par rapport à la zone de travail (4), le dispositif chauffant (5, 22) ou au moins une partie (6, 7) du dispositif chauffant (5, 22) étant raccordé(e) à un entraînement (8) et pouvant être entraîné(e) par celui-ci.

3. Gabarit de soudage selon la revendication 1 ou 2, **caractérisé en ce que** le dispositif chauffant comprend au moins un inducteur (5) disposé dans la zone de travail (4) pour le chauffage de la pièce (3) par induction.

4. Gabarit de soudage selon la revendication 3, **caractérisé en ce que** l'inducteur (5) est formé d'au moins deux parties d'inducteur (6, 7) qui sont mobiles l'une par rapport à l'autre pour, dans une position de travail, entourer une pièce (3) à souder et, dans une position d'ouverture dans laquelle les parties d'inducteur (6, 7) sont espacées l'une de l'autre, libérer la pièce (3).

5. Gabarit de soudage selon la revendication 4, **caractérisé en ce que** les parties d'inducteur (6, 7) sont mobiles l'une par rapport à l'autre dans une direction transversale, de préférence perpendiculaire, à l'axe (19) de l'inducteur (5).

6. Gabarit de soudage selon l'une des revendications 3 à 5, **caractérisé en ce qu'**au moins une des parties d'inducteur (6, 7) est raccordée à un entraînement (8) et peut être entraînée par celui-ci par rapport à l'autre partie d'inducteur (7, 6).

7. Gabarit de soudage selon l'une des revendications 2 à 6, **caractérisé en ce que** le gabarit de soudage (1) comprend un système de commande (12) qui est raccordé à l'entraînement (8) et commande celui-ci automatiquement.

8. Gabarit de soudage selon l'une des revendications 3 à 7, **caractérisé en ce que** le gabarit de soudage (1) présente au moins deux parties de boîtier (14, 15) qui sont mobiles l'une par rapport à l'autre pour, dans une position de travail, former une chambre (21) autour de la zone de travail (4), et **en ce qu'**une des parties d'inducteur (6) est intégrée dans une des parties de boîtier (14), et une autre partie d'inducteur (7) est intégrée dans une autre partie de boîtier (15).

9. Gabarit de soudage selon la revendication 8, **caractérisé en ce que** les parties d'inducteur (6, 7) sont respectivement situées sur la paroi intérieure des parties de boîtier (14, 15).

10. Gabarit de soudage selon la revendication 8 ou 9, **caractérisé en ce qu'**au moins une des parties de boîtier (14) présente une entrée (17) pour l'amenée d'un agent de rinçage.

11. Gabarit de soudage selon l'une des revendications 8 à 10, **caractérisé en ce qu'**au moins une des parties de boîtier (15) présente une sortie (18) pour l'évacuation d'un agent de rinçage.

12. Gabarit de soudage selon l'une des revendications 8 à 11, **caractérisé en ce qu'**au moins une des parties de boîtier (14, 15) présente une ouverture de travail (16) à travers laquelle l'énergie thermique peut passer de la tête de soudage (2) disposée à l'extérieur de la chambre, en particulier sous forme de faisceau laser, à la pièce (3).

13. Gabarit de soudage selon l'une des revendications précédentes, **caractérisé en ce que**, dans la zone de travail (4), il est disposé un capteur de température (13) qui est de préférence couplé à l'une des parties d'inducteur (6, 7).

14. Gabarit de soudage selon l'une des revendications 3 à 13, **caractérisé en ce que** le nombre de spires de l'inducteur (5) est symétrique par rapport à la zone de travail (4).

15. Gabarit de soudage selon l'une des revendications 3 à 14, **caractérisé en ce que** le gabarit de soudage (1) comprend un système de commande (12) qui est raccordé à une alimentation électrique (11) de l'inducteur (5), à la tête de soudage (2) et éventuellement au capteur de température (13).

16. Gabarit de soudage selon l'une des revendications précédentes, **caractérisé en ce que** le dispositif chauffant (22) est une source de rayonnement, en particulier une source laser, la source de rayonnement pouvant de préférence être mise en rotation autour de la zone de travail (4) par un entraînement (8).

17. Gabarit de soudage selon l'une des revendications précédentes, **caractérisé en ce que** le dispositif chauffant comprend des moyens de déviation de faisceau qui dévient les faisceaux émis par la tête de soudage (2) et les dirigent vers la zone de travail (4).

18. Gabarit de soudage selon l'une des revendications précédentes, **caractérisé en ce que** le dispositif chauffant comprend au moins un élément chauffant électrique.

19. Gabarit de soudage selon l'une des revendications précédentes, **caractérisé en ce que** le dispositif chauffant au moins au nombre de un est constitué de telle sorte qu'il agit sur la pièce (3) des deux côté de l'emplacement de soudage.

20. Gabarit de soudage selon l'une des revendications précédentes, **caractérisé en ce qu'**un premier dispositif chauffant (5, 22) agit sur un côté de l'emplacement de soudage, et un deuxième dispositif chauffant (5, 22) agit sur l'autre côté de l'emplacement de soudage.

21. Gabarit de soudage selon l'une des revendications précédentes, **caractérisé en ce que** chaque emplacement de soudage ou respectivement chaque trajectoire de soudage comprend un propre dispositif chauffant (5, 22).

22. Gabarit de soudage selon l'une des revendications précédentes, **caractérisé en ce que** le gabarit de soudage (1) comprend un dispositif de retenue (100) au moyen duquel un métal d'apport (102) peut être mis en place entre une première surface d'assemblage (111) d'un premier composant (109) et une deuxième surface d'assemblage (112) d'un deuxième composant (110), le métal d'apport (102) étant constitué en tant que corps de métal d'apport (103) formé qui présente une première surface d'appui (105) qui peut être placée contre la première surface d'assemblage (111) du premier composant (109), et présente une deuxième surface d'appui (106) qui peut être placée contre la deuxième surface d'assemblage (112) du deuxième composant (110).

23. Procédé de soudage, en particulier procédé de soudage laser, pour le soudage de pièces (3) avec un gabarit de soudage selon l'une des revendications précédentes, **caractérisé par** les étapes : positionnement d'une pièce (3) à souder dans la zone de travail (4) de la tête de soudage ; réalisation du processus de soudage par l'actionnement de la tête de soudage (2) ; et chauffage de la pièce (3) par le dispositif chauffant (5) avant, pendant et/ou après le processus de soudage.

24. Procédé de soudage, en particulier procédé de soudage laser, pour le soudage de pièces (3) métalliques avec un gabarit de soudage selon l'une des revendications 4 à 15, **caractérisé par** les étapes : positionnement d'une pièce (3) à souder dans la zone de travail (4) de la tête de soudage (2) pendant que l'inducteur (5) se trouve dans une position d'ouverture dans laquelle les parties d'inducteur (6, 7) sont espacées l'une de l'autre ; déplacement relatif des parties d'inducteur (6, 7) vers la position de travail pour entourer la pièce (3) à souder ; réalisation du processus de soudage par l'actionnement de la tête de soudage (2) ; et chauffage de la pièce (3) par l'alimentation en courant de l'inducteur (5).

25. Processus de soudage selon la revendication 23 ou 24, **caractérisé en ce qu'**un chauffage de la pièce (3) par le dispositif chauffant (5, 22) est effectué avant le processus de soudage.

26. Processus de soudage selon la revendication 25, **caractérisé en ce que**, pendant le préchauffage par le dispositif chauffant (5, 22), la pièce (3) est, dans la zone du futur cordon de soudure, amenée à une température entre 300 °C et 450 °C, de préférence entre 320 °C et 400 °C.

27. Processus de soudage selon l'une des revendications 23 à 26, **caractérisé en ce qu'**un chauffage de la pièce (3) par le dispositif chauffant (5, 22) est effectué pendant le processus de soudage.

28. Processus de soudage selon l'une des revendications 23 à 27, **caractérisé en ce qu'**un chauffage de la pièce (3) par le dispositif chauffant (5, 22) est effectué après le processus de soudage.

29. Processus de soudage selon la revendication 28, **caractérisé en ce que**, pendant le post-chauffage par le dispositif chauffant (5, 22), la pièce (3) est, dans la zone du cordon de soudure, amenée à une température entre 250 °C et 400 °C, de préférence entre 300 °C et 380 °C.

30. Processus de soudage selon l'une des revendications 23 à 29, **caractérisé en ce que**, avant, pendant et/ou après le processus de soudage, une mesure de la température est effectuée par un capteur de température (13) disposé dans la zone de travail (4), et **en ce que** le chauffage de la pièce (3) par le dispositif chauffant (5, 22) est régulé par un système de commande (12) en fonction de la mesure de la température.

31. Processus de soudage selon l'une des revendications 23 à 30, **caractérisé en ce que**, dans le processus de soudage, les étapes de procédé suivantes sont réalisées en plus :
- fourniture d'un premier composant (109) ;
- fourniture d'un métal d'apport (102), constitué en tant que corps de métal d'apport (103) formé, avec une première surface d'appui (105) et une deuxième surface d'appui (106);
- positionnement du corps de métal d'apport (103), la première surface d'appui (105) du corps de métal d'apport (103) étant amenée en appui contre une première surface d'assemblage (111) du premier composant (109) ;
- positionnement d'un deuxième composant (110) de façon relative par rapport au premier composant (109), une deuxième surface d'assemblage (112) d'un deuxième composant (110) étant amenée en appui contre la deuxième surface d'appui (106) du corps de métal d'apport (103).

32. Processus de soudage selon la revendication 31, **caractérisé en ce que** les deux composants (109, 110), avant et/ou pendant le processus de soudage, sont exposés à une force de pression (130) en sens opposé et sont donc pressés l'un contre l'autre.

33. Processus de soudage selon l'une des revendications 31 à 32, **caractérisé en ce que** l'énergie thermique introduite est dimensionnée de telle sorte que, pendant le processus de soudage, seul un tronçon de bord (139) extérieur du corps de métal d'apport (103) ainsi que les tronçons partiels (140, 141) des deux composants (109, 110) respectivement contigus au tronçon de bord (139) extérieur sont fondus.

34. Processus de soudage selon l'une des revendications 31 à 33, **caractérisé en ce que** les deux surfaces d'assemblage (111, 112) des composants (109, 110) sont constituées avec une section transversale 113, 114) à peu près égale l'une à l'autre et sont disposées de façon juxtaposée au voisinage l'une de l'autre sous la forme d'un joint abouté (134), avec la formation d'une distance normale (131) qui est enjambée par le corps de métal d'apport (103).
